# EUROPEAN PATENT SPECIFICATION

(11) **EP 4 471 565 B1**
(45) Date of publication and mention of the grant of the patent: **06.05.2026**
(21) Application number: 23773673.1
(22) Date of filing: 15.03.2023
(51) Int. Cl.: G06F 3/0487, G06F 3/0354, G06F 3/038, G06F 3/04812, G06F 3/04847

(54) **INPUT DEVICE CONNECTION METHOD AND SYSTEM**
EINGABEVORRICHTUNGSVERBINDUNGSVERFAHREN UND -SYSTEM
PROCÉDÉ ET SYSTÈME DE CONNEXION DE DISPOSITIF D'ENTRÉE

(30) Priority: 25.03.2022 CN 202210302737
(43) Date of publication of application: 04.12.2024
(73) Proprietor: Huawei Technologies Co., Ltd., Shenzhen, Guangdong 518129 (CN)
(72) Inventor: MOU, Yang, Shenzhen, Guangdong 518129 (CN); LIN, Jianxin, Shenzhen, Guangdong 518129 (CN); YANG, Wenbin, Shenzhen, Guangdong 518129 (CN)
(74) Representative: Pfenning, Meinig & Partner mbB
(86) International application number: PCT/CN2023/081647
(87) International publication number: WO 2023/179425

(56) References cited:
- CN-A- 107 463 518
- CN-A- 109 885 232
- CN-A- 113 377 272
- CN-A- 114 201 128
- CN-A- 114 885 442
- US-A1- 2004 201 628
- US-A1- 2014 125 575
- US-A1- 2016 110 302
- US-A1- 2020 213 438
- US-A1- 2022 015 178
- US-A1- 2023 273 812

## Description

### TECHNICAL FIELD

This application relates to the field of terminal technologies, and in particular, to an input device connection method, and a system.

### BACKGROUND

With diversified development of terminal technologies, a terminal device usually used by a user in daily life or work gradually changes from a single device to a plurality of devices. Generally, the terminal device may be connected to one or more input devices, to implement a corresponding function. For example, the input device may be a wireless peripheral.

However, when the user simultaneously uses a plurality of terminal devices, the user needs to carry and maintain input devices matching the plurality of terminal devices. For example, when the user simultaneously uses a personal computer (personal computer, PC) 1 and a PC 2, if the PC 1 and the PC 2 are separately configured with a set of mouse and keyboard, the user needs to perform operations alternately between a mouse 1 and a keyboard 1 that match the PC 1 and a mouse 2 and a keyboard 2 that match the PC 2. Alternatively, if two terminal devices share a set of input devices, the user needs to manually cut off a connection relationship between the set of input devices and one terminal device, and reconfigure a connection relationship between the set of input devices and the other terminal device. For example, when the user controls the PC 1 through a mouse connected to the PC 1, if the user wants to operate the PC 2 through the same mouse, the user needs to manually cut off a connection relationship between the mouse and the PC 1, and reconfigure a connection relationship between the mouse and the PC 2. The foregoing two methods are very complex and inefficient.
US2016110302A1 discloses a method and system of switching a wireless connection between a plurality of input devices and a first host device to at least a second host device. Embodiments of the invention are directed to systems and methods for switching multiple, independently connected data input devices from a first host computing device to a second host computing device together based on a single command or operation.
US2014125575A1 discloses a method including analyzing data associated with an image captured by a camera to determine a visual orientation and/or eye gaze movement of a user of a computer. CN114201128A discloses a display method and equipment, and relates to the field of electronic equipment. When multiple terminals are cooperatively used, interfaces can be displayed on corresponding devices according to different input devices used by user input operation. The privacy of the user is protected, the attention of the user is prevented from being distracted, and the use experience of the user is improved.

### SUMMARY

This application provides an input device connection method, a device, and a system, to reduce operation complexity of inputting information to a plurality of devices, and improve input efficiency.

To achieve the foregoing objectives, the following technical solutions are used in embodiments of this application.

The invention is defined in the appended set of claims. According to a first aspect, an input device connection method is provided. The method is applied to a communication system, the communication system includes a first input device, a first terminal device, and a second terminal device, and the method includes: When the first input device is in a multi-connection working mode, the first input device maintains communication connections to both the first terminal device and the second terminal device. The first terminal device sends, to the first input device, migration indication information indicating the first input device to perform focus device switching. The first input device switches a focus device from the first terminal device to the second terminal device in response to the migration indication information. Before the first input device switches the focus device from the first terminal device to the second terminal device, the first input device is configured to input information to the first terminal device; and after the first input device switches the focus device from the first terminal device to the second terminal device, the first input device is configured to input information to the second terminal device.

That an input device performs focus migration specifically means that a focus device of the input device is switched from one terminal device (that is, a source host) to another terminal device (that is, a target host). It should be noted that, after the input device migrates from one terminal device (that is, the source host) to another terminal device (that is, the target host), a communication connection between the input device and the source host is not disconnected. A focus device is a terminal device that establishes a communication connection to an input device and can be directly controlled by the input device currently. Anon-focus device is a terminal device that establishes a communication connection to an input device but cannot be directly controlled by the input device currently.

According to the solution provided in the first aspect, a same input device (for example, the first input device) may randomly perform focus migration between a plurality of terminal devices (for example, the first terminal device and the second terminal device). Before and after focus migration, the input device may simultaneously maintain communication connections to the plurality of terminal devices, and exchange, in a background, information with a non-focus device based on a communication connection between the input device and the non-focus device. Based on this, the input device can implement seamless focus migration between a plurality of terminal devices, to ensure that no interface display freezing occurs during switching, and implement an effect of seamless continuation of the input device across devices. In addition, according to this method, information synchronization does not need to rely on a wireless local area network (wireless local area network, WLAN), that is, the plurality of terminal devices do not need to connect to a same WLAN.

According to the invention, first input device is a wireless mouse, and the method further includes: The first terminal device sends, to the first input device, information about a position at which a mouse cursor slides out of a display of the first terminal device. The first input device sends, to the second terminal device, the information about the position at which the mouse cursor slides out of the display of the first terminal device, so that the second terminal device determines an initial position of the mouse cursor on a display of the second terminal device. In an example, the method provided in this application may be used for seamless focus device switching of a wireless mouse between a plurality of terminal devices. The source host (for example, the first terminal device) may synchronize, to the target host (for example, the second terminal device) through the wireless mouse, the information about the position at which the mouse cursor slides out of the display of the first terminal device, so that the target host continues the source host (for example, the first terminal device) to display the mouse cursor, thereby implementing an effect of seamless continuation of the mouse cursor across devices.

In a possible implementation, that the first terminal device sends migration indication information to the first input device includes: The first terminal device sends the migration indication information to the first input device when detecting that the mouse cursor tends to slide to another terminal device. In an example, that the source host (for example, the first terminal device) detects that the mouse cursor tends to slide to another terminal device may be used as a trigger condition for triggering seamless focus device switching of the wireless mouse between the plurality of terminal devices. By using the user-friendly triggering method, operation experience of a user for inputting information to a plurality of devices can be improved.

In a possible implementation, that the first terminal device sends migration indication information to the first input device includes: The first terminal device sends the migration indication information to the first input device when detecting that the mouse cursor tends to slide to another terminal device and determining that the another terminal device is the second terminal device, where the migration indication information carries identification information of the second terminal device. In a manner, the source host (for example, the first terminal device) may determine the target host and notify the wireless mouse. This manner provides a possible use scenario.

In a possible implementation, the method further includes: The first terminal device determines, based on the information about the position at which the mouse cursor slides out of the display of the first terminal device and multi-device connection configuration information of the first input device, that the another terminal device is the second terminal device, where the multi-device connection configuration information of the first input device represents position sorting among a plurality of terminal devices. In a manner, the source host (for example, the first terminal device) may determine the target host based on the information about the position at which the mouse cursor slides out of the display of the first terminal device and the position sorting among the plurality of terminal devices represented by the obtained multi-device connection configuration information. This manner provides a possible use scenario.

In a possible implementation, the method further includes: the first terminal device determines the multi-device connection configuration information of the first input device based on position sorting among a plurality of terminal devices that is customized by a user on a user interface. According to the method provided in this application, the user is supported in presetting the multi-device connection configuration information of the first input device by using a customized setting on the user interface of the source host (for example, the first terminal device), so that the source host may further determine the target host when subsequently detecting that the mouse cursor tends to slide to the another terminal device.

For example, the user interface on the source host is, for example, an interface used to perform multi-device connection configuration of the wireless mouse.

For example, the user may customize the position sorting among the plurality of terminal devices by modifying the position sorting among the terminal devices, disabling a terminal device, deleting a terminal device, enabling a terminal device, adding a terminal device, or the like.

In a possible implementation, the method further includes: The first terminal device obtains the multi-device connection configuration information of the first input device based on an automatic positioning technology. According to the method provided in this application, the source host (for example, the first terminal device) is supported in obtaining the multi-device connection configuration information of the first input device based on the automatic positioning technology, so that the source host may further determine the target host when subsequently detecting that the mouse cursor tends to slide to the another terminal device.

In a possible implementation, that the first input device switches a focus device from the first terminal device to the second terminal device in response to the migration indication information includes: The first input device switches the focus device from the first terminal device to the second terminal device in response to the migration indication information based on the information about the position at which the mouse cursor slides out of the display of the first terminal device and multi-device connection configuration information of the first input device, where the multi-device connection configuration information of the first input device represents position sorting among a plurality of terminal devices. In a manner, the first input device may determine the target host based on the information about the position at which the mouse cursor slides out of the display of the first terminal device and the position sorting among the plurality of terminal devices that is represented by the multi-device connection configuration information. This manner provides another possible use scenario.

In a possible implementation, the method further includes: The first input device obtains the multi-device connection configuration information of the first input device based on an automatic positioning technology. According to the method provided in this application, the first input device is supported in obtaining the multi-device connection configuration information of the first input device based on the automatic positioning technology, so that the first input device may further determine the target host when receiving the migration indication information of the source host.

In a possible implementation, the automatic positioning technology is an ultrasonic positioning technology.

In a possible implementation, after the first input device switches a focus device from the first terminal device to the second terminal device, the method further includes: The first input device sends a personalized configuration parameter of the first input device to the second terminal device, where the personalized configuration parameter includes one or more of the following: dots per inch, shortcut key settings, a main key definition, and fingerprint information. Through synchronization of the personalized configuration parameter, it can be ensured that after the input device switches the focus device, the target host can synchronize a relevant personalized configuration parameter, for example, a cursor display parameter of the source host, thereby implementing seamless migration.

In a possible implementation, the method further includes: After detecting an operation of enabling a multi-device connection function by the user on the user interface, the first terminal device sends a working mode switching instruction to the first input device, to instruct the first input device to switch from a normal mode to the multi-connection mode. The first input device switches from the normal mode to the multi-connection mode, where the first input device in the normal mode establishes a wireless communication connection to only the first terminal device. The first input device provides a user interface option that supports the multi-device connection function, so that the user enables the multi-device connection function to perform focus device switching when the user has a focus device switching requirement. Through the optional function option, the user may be provided with use experience that supports a plurality of scenarios. For example, the user may enable the multi-device connection function by performing an operation of turning on a multi-connection switch on the user interface.

In a possible implementation, the method further includes: After detecting an operation of turning on, by the user, a switch used to enable a multi-device connection function on the first input device, the first input device switches from a normal mode to the multi-connection mode. The first input device provides a switch that supports the multi-device connection function, so that the user turns on the multi-device connection switch to perform focus device switching when the user has a focus device switching requirement. Through the optional function option, the user may be provided with use experience that supports a plurality of scenarios. For example, the switch of the multi-device connection function may be a physical button on the first input device.

In a possible implementation, the communication system further includes a second input device. The second device is in a multi-connection working mode, and maintains communication connections to both the first terminal device and the second terminal device. The method further includes: The first terminal device sends collaborative migration indication information to the second input device. The second input device switches the focus device from the first terminal device to the second terminal device in response to the collaborative migration indication information, where before the second input device switches the focus device from the first terminal device to the second terminal device, the second input device is configured to input information to the first terminal device; and after the second input device switches the focus device from the first terminal device to the second terminal device, the second input device is configured to input information to the second terminal device. The solution provided in this application supports collaborative migration of a plurality of input devices. For example, when the first input device switches the focus device from the first device to the second device, the second input device synchronously switches the focus device from the first device to the second device. This method can greatly simplify an operation step of simultaneously using a plurality of terminal devices by the user, to implement seamless and synchronous migration of a plurality of input devices between the plurality of terminal devices, ensure that no interface display freezing occurs during switching, and implement an effect of seamless continuation of the plurality of input devices across devices. In addition, according to this method, information synchronization does not need to rely on a WLAN, that is, the plurality of terminal devices do not need to connect to a same WLAN.

In a possible implementation, the second input device is a wireless keyboard. That the first terminal device sends collaborative migration indication information to the second input device includes: After detecting an operation of enabling a keyboard and mouse collaboration function by the user, the first terminal device sends the collaborative migration indication information to the first input device. The first input device provides an option that supports the keyboard and mouse collaboration function, so that the user enables the keyboard and mouse collaboration function to implement keyboard and mouse collaboration when the user has a keyboard and mouse collaboration requirement. Through the optional function option, the user may be provided with use experience that supports a plurality of scenarios.

In a possible implementation, the operation of enabling the keyboard and mouse collaboration function by the user is an operation of enabling the keyboard and mouse collaboration function by the user on the user interface, or an operation of turning on a switch by the user on the second input device. For example, the user may enable the keyboard and mouse collaboration function on the user interface, or enable the keyboard and mouse collaboration function by using a physical button on the second input device.

In a possible implementation, when the first input device is in the multi-connection working mode, the first input device maintains a communication connection to the first terminal device through a first media access control (media access control, MAC) address and a communication connection to the second terminal device through a second MAC address. Communication connections to a plurality of terminal devices are maintained through different MAC addresses, so that a case in which the input device cannot be connected to the plurality of terminal devices simultaneously due to MAC preemption and the like can be avoided.

According to a second aspect not covered by the claimed invention, an input device connection method is provided. The method is applied to a first input device, and the method includes: When the first input device is in a multi-connection mode, the first input device maintains communication connections to both a first terminal device and a second terminal device. The first input device receives migration indication information that is from the first terminal device and that indicates the first input device to perform focus device switching. The first input device switches a focus device from the first terminal device to the second terminal device in response to the migration indication information, where before the first input device switches the focus device from the first terminal device to the second terminal device, the first input device is configured to input information to the first terminal device; and after the first input device switches the focus device from the first terminal device to the second terminal device, the first input device is configured to input information to the second terminal device.

According to the solution provided in the second aspect, a same input device (for example, the first input device) may randomly perform focus migration between a plurality of terminal devices (for example, the first terminal device and the second terminal device). Before and after focus migration, the input device may simultaneously maintain communication connections to the plurality of terminal devices, and exchange, in a background, information with a non-focus device based on a communication connection between the input device and the non-focus device. Based on this, the input device can implement seamless focus migration between a plurality of terminal devices, to ensure that no interface display freezing occurs during switching, and implement an effect of seamless continuation of the input device across devices. In addition, according to this method, information synchronization does not need to rely on a WLAN, that is, the plurality of terminal devices do not need to connect to a same WLAN.

According to the invention, the first input device is a wireless mouse, and the method further includes: The first input device obtains, from the first terminal device, information about a position at which a mouse cursor slides out of a display of the first terminal device. The first input device sends, to the second terminal device, the information about the position at which the mouse cursor slides out of the display of the first terminal device, so that the second terminal device determines an initial position of the mouse cursor on a display of the second terminal device. In an example, the method provided in this application may be used for seamless focus device switching of a wireless mouse between a plurality of terminal devices. The source host (for example, the first terminal device) may synchronize, to the target host (for example, the second terminal device) through the wireless mouse, the information about the position at which the mouse cursor slides out of the display of the first terminal device, so that the target host continues the source host (for example, the first terminal device) to display the mouse cursor, thereby implementing an effect of seamless continuation of the mouse cursor across devices.

In a possible implementation, the migration indication information carries identification information of the second terminal device. In a manner, the source host (for example, the first terminal device) may determine the target host and notify the wireless mouse. This manner provides a possible use scenario.

In a possible implementation, that the first input device switches a focus device from the first terminal device to the second terminal device in response to the migration indication information includes: The first input device switches the focus device from the first terminal device to the second terminal device in response to the migration indication information based on the information about the position at which the mouse cursor slides out of the display of the first terminal device and multi-device connection configuration information of the first input device, where the multi-device connection configuration information of the first input device represents position sorting among a plurality of terminal devices. In a manner, the first input device may determine the target host based on the information about the position at which the mouse cursor slides out of the display of the first terminal device and the position sorting among the plurality of terminal devices that is represented by the multi-device connection configuration information. This manner provides another possible use scenario.

In a possible implementation, the first input device obtains the multi-device connection configuration information of the first input device based on an automatic positioning technology. According to the method provided in this application, the first input device is supported in obtaining the multi-device connection configuration information of the first input device based on the automatic positioning technology, so that the first input device may further determine the target host when receiving the migration indication information of the source host.

In a possible implementation, the automatic positioning technology is an ultrasonic positioning technology.

In a possible implementation, after the first input device switches a focus device from the first terminal device to the second terminal device, the method further includes: The first input device sends a personalized configuration parameter of the first input device to the second terminal device, where the personalized configuration parameter includes one or more of the following: dots per inch, shortcut key settings, a main key definition, and fingerprint information. Through synchronization of the personalized configuration parameter, it can be ensured that after the input device switches the focus device, the target host can synchronize a relevant personalized configuration parameter, for example, a cursor display parameter of the source host, thereby implementing seamless migration.

In a possible implementation, the method further includes: The first input device receives a working mode switching instruction from the first terminal device. The first input device switches from the normal mode to the multi-connection mode, where the first input device in the normal mode establishes a wireless communication connection to only the first terminal device. Through the optional function option, the user may be provided with use experience that supports a plurality of scenarios. For example, the user may enable the multi-device connection function by performing an operation of turning on a multi-connection switch on the user interface.

In a possible implementation, the method further includes: After detecting an operation of turning on, by the user, a switch used to enable a multi-device connection function on the first input device, the first input device switches from a normal mode to the multi-connection mode. The first input device provides a switch that supports the multi-device connection function, so that the user turns on the multi-device connection switch to perform focus device switching when the user has a focus device switching requirement. Through the optional function option, the user may be provided with use experience that supports a plurality of scenarios. For example, the switch of the multi-device connection function may be a physical button on the first input device.

In a possible implementation, when the first input device is in the multi-connection working mode, the first input device maintains a communication connection to the first terminal device through a first MAC address and a communication connection to the second terminal device through a second MAC address. Communication connections to a plurality of terminal devices are maintained through different MAC addresses, so that a case in which the input device cannot be connected to the plurality of terminal devices simultaneously due to MAC preemption and the like can be avoided.

According to a third aspect not covered by the claimed invention, an input device connection method is provided. The method is applied to a second input device, and the method includes: When the second input device is in a multi-connection mode, the second input device maintains communication connections to both a first terminal device and a second terminal device. The first terminal device sends, to the second input device, collaborative migration indication information indicating the second input device to collaborate with another input device to perform focus device switching, where the collaborative migration indication information carries identification information of the second terminal device. The second input device switches a focus device from the first terminal device to the second terminal device in response to the collaborative migration indication information, where before the second input device switches the focus device from the first terminal device to the second terminal device, the second input device is configured to input information to the first terminal device; and after the second input device switches the focus device from the first terminal device to the second terminal device, the second input device is configured to input information to the second terminal device.

In an example, the collaborative migration indication information may be sent by the first terminal device to the second input device after the first input device performs focus device switching.

It should be noted that, after the second input device migrates from one terminal device (that is, a source host) to another terminal device (that is, a target host), a communication connection between the second input device and the source host is not disconnected.

According to the solution provided in the third aspect, when the first input device switches the focus device from the first device to the second device, the second input device synchronously switches the focus device from the first device to the second device. This method can greatly simplify an operation step of simultaneously using a plurality of terminal devices by a user, to implement seamless and synchronous migration of a plurality of input devices between the plurality of terminal devices, ensure that no interface display freezing occurs during switching, and implement an effect of seamless continuation of the plurality of input devices across devices. In addition, according to this method, information synchronization does not need to rely on a WLAN, that is, the plurality of terminal devices do not need to connect to a same WLAN.

In a possible implementation, the second input device is a wireless keyboard.

In a possible implementation, the collaborative migration indication information may be sent by the first terminal device to the second input device after the first terminal device detects an operation of enabling a keyboard and mouse collaboration function by the user. An option that supports the keyboard and mouse collaboration function is provided, so that the user enables the keyboard and mouse collaboration function to implement keyboard and mouse collaboration when the user has a keyboard and mouse collaboration requirement. Through the optional function option, the user may be provided with use experience that supports a plurality of scenarios.

In a possible implementation, the operation of enabling the keyboard and mouse collaboration function by the user is an operation of enabling the keyboard and mouse collaboration function by the user on the user interface, or an operation of turning on a switch by the user on the second input device. For example, the user may enable the keyboard and mouse collaboration function on the user interface, or enable the keyboard and mouse collaboration function by using a physical button on the second input device.

In a possible implementation, after the second input device switches a focus device from the first terminal device to the second terminal device, the method further includes: The second input device sends a personalized configuration parameter of the second input device to the second terminal device, where the personalized configuration parameter includes shortcut key settings. Through synchronization of the personalized configuration parameter, it can be ensured that after the input device switches the focus device, the target host can synchronize a relevant personalized configuration parameter, for example, shortcut key settings of the input device, thereby facilitating a user operation.

In a possible implementation, when the second input device is in the multi-connection working mode, the second input device maintains a communication connection to the first terminal device through a third MAC address and a communication connection to the second terminal device through a fourth MAC address. Communication connections to a plurality of terminal devices are maintained through different MAC addresses, so that a case in which the input device cannot be connected to the plurality of terminal devices simultaneously due to MAC preemption and the like can be avoided.

According to a fourth aspect not covered by the claimed invention, an input device, for example, a first input device, is provided. The first input device includes: a communication unit, configured to: when the first input device is in a multi-connection mode, maintain communication connections to both a first terminal device and a second terminal device, and receive migration indication information that is from the first terminal device and that indicates the first input device to perform focus device switching; and a processing unit, configured to switch a focus device of the first input device from the first terminal device to the second terminal device in response to the migration indication information, where before the first input device switches the focus device from the first terminal device to the second terminal device, the first input device is configured to input information to the first terminal device; and after the first input device switches the focus device from the first terminal device to the second terminal device, the first input device is configured to input information to the second terminal device.

According to the solution provided in the fourth aspect, a same input device (for example, the first input device) may randomly perform focus migration between a plurality of terminal devices (for example, the first terminal device and the second terminal device). Before and after focus migration, the input device may simultaneously maintain communication connections to the plurality of terminal devices, and exchange, in a background, information with a non-focus device based on a communication connection between the input device and the non-focus device. Based on this, the input device can implement seamless focus migration between a plurality of terminal devices, to ensure that no interface display freezing occurs during switching, and implement an effect of seamless continuation of the input device across devices. In addition, according to this method, information synchronization does not need to rely on a WLAN, that is, the plurality of terminal devices do not need to connect to a same WLAN.

According to the invention, the first input device is a wireless mouse. The communication unit is further configured to: obtain, from the first terminal device, information about a position at which a mouse cursor slides out of a display of the first terminal device; and send, to the second terminal device, the information about the position at which the mouse cursor slides out of the display of the first terminal device, so that the second terminal device determines an initial position of the mouse cursor on a display of the second terminal device. In an example, the method provided in this application may be used for seamless focus device switching of a wireless mouse between a plurality of terminal devices. The source host (for example, the first terminal device) may synchronize, to the target host (for example, the second terminal device) through the wireless mouse, the information about the position at which the mouse cursor slides out of the display of the first terminal device, so that the target host continues the source host (for example, the first terminal device) to display the mouse cursor, thereby implementing an effect of seamless continuation of the mouse cursor across devices.

In a possible implementation, the migration indication information carries identification information of the second terminal device. In a manner, the source host (for example, the first terminal device) may determine the target host and notify the wireless mouse. This manner provides a possible use scenario.

In a possible implementation, that the processing unit switches a focus device of the first input device from the first terminal device to the second terminal device in response to the migration indication information includes: The processing unit switches the focus device of the first input device from the first terminal device to the second terminal device in response to the migration indication information based on the information about the position at which the mouse cursor slides out of the display of the first terminal device and multi-device connection configuration information of the first input device, where the multi-device connection configuration information of the first input device represents position sorting among a plurality of terminal devices. In a manner, the first input device may determine the target host based on the information about the position at which the mouse cursor slides out of the display of the first terminal device and the position sorting among the plurality of terminal devices that is represented by the multi-device connection configuration information. This manner provides another possible use scenario.

In a possible implementation, the first input device further includes: a positioning unit, configured to obtain the multi-device connection configuration information of the first input device based on an automatic positioning technology. According to the method provided in this application, the first input device is supported in obtaining the multi-device connection configuration information of the first input device based on the automatic positioning technology, so that the first input device may further determine the target host when receiving the migration indication information of the source host.

In a possible implementation, the automatic positioning technology is an ultrasonic positioning technology.

In a possible implementation, the communication unit is further configured to: after the processing unit switches the focus device of the first input device from the first terminal device to the second terminal device, send a personalized configuration parameter of the first input device to the second terminal device, where the personalized configuration parameter includes one or more of the following: dots per inch, shortcut key settings, a main key definition, and fingerprint information. Through synchronization of the personalized configuration parameter, it can be ensured that after the input device switches the focus device, the target host can synchronize a relevant personalized configuration parameter, for example, a cursor display parameter of the source host, thereby implementing seamless migration.

In a possible implementation, the communication unit is further configured to receive a working mode switching instruction from the first terminal device; and the processing unit is further configured to switch a working mode of the first input device from a normal mode to the multi-connection mode, where the first input device in the normal mode establishes a wireless communication connection to only the first terminal device. Through the optional function option, the user may be provided with use experience that supports a plurality of scenarios. For example, the user may enable the multi-device connection function by performing an operation of turning on a multi-connection switch on the user interface.

In a possible implementation, the first input device further includes a switch of a multi-device connection function. The processing unit is further configured to: after the first input device detects an operation of turning on, by the user, the switch used to enable the multi-device connection function on the first input device, switch the working mode of the first input device from the normal mode to the multi-connection mode. The first input device provides a switch that supports the multi-device connection function, so that the user turns on the multi-device connection switch to perform focus device switching when the user has a focus device switching requirement. Through the optional function option, the user may be provided with use experience that supports a plurality of scenarios. For example, the switch of the multi-device connection function may be a physical button on the first input device.

In a possible implementation, the communication unit is specifically configured to: when the first input device is in the multi-connection working mode, maintain a communication connection to the first terminal device through a first MAC address and a communication connection to the second terminal device through a second MAC address. Communication connections to a plurality of terminal devices are maintained through different MAC addresses, so that a case in which the input device cannot be connected to the plurality of terminal devices simultaneously due to MAC preemption and the like can be avoided.

According to a fifth aspect not covered by the claimed invention, an input device, for example, a second input device, is provided. The second input device includes: a communication unit, configured to: when the second input device is in a multi-connection mode, maintain communication connections to both a first terminal device and a second terminal device, and send, to the second input device, collaborative migration indication information indicating the second input device to collaborate with another input device to perform focus device switching, where the collaborative migration indication information carries identification information of the second terminal device; a processing unit, configured to switch a focus device of the second input device from the first terminal device to the second terminal device in response to the collaborative migration indication information, where before the second input device switches the focus device from the first terminal device to the second terminal device, the second input device is configured to input information to the first terminal device; and after the second input device switches the focus device from the first terminal device to the second terminal device, the second input device is configured to input information to the second terminal device.

According to the solution provided in the fifth aspect, when the first input device switches the focus device from the first device to the second device, the second input device synchronously switches the focus device from the first device to the second device. This method can greatly simplify an operation step of simultaneously using a plurality of terminal devices by the user, to implement seamless and synchronous migration of a plurality of input devices between the plurality of terminal devices, ensure that no interface display freezing occurs during switching, and implement an effect of seamless continuation of the plurality of input devices across devices. In addition, according to this method, information synchronization does not need to rely on a WLAN, that is, the plurality of terminal devices do not need to connect to a same WLAN.

In a possible implementation, the second input device is a wireless keyboard.

In a possible implementation, the collaborative migration indication information may be sent by the first terminal device to the second input device after the first terminal device detects an operation of enabling a keyboard and mouse collaboration function by the user. An option that supports the keyboard and mouse collaboration function is provided, so that the user enables the keyboard and mouse collaboration function to implement keyboard and mouse collaboration when the user has a keyboard and mouse collaboration requirement. Through the optional function option, the user may be provided with use experience that supports a plurality of scenarios.

In a possible implementation, the operation of enabling the keyboard and mouse collaboration function by the user is an operation of enabling the keyboard and mouse collaboration function by the user on the user interface, or an operation of turning on a switch by the user on the second input device. For example, the user may enable the keyboard and mouse collaboration function on the user interface, or enable the keyboard and mouse collaboration function by using a physical button on the second input device.

In a possible implementation, the communication unit is further configured to: after the processing unit switches the focus device of the second input device from the first terminal device to the second terminal device, send a personalized configuration parameter of the second input device to the second terminal device, where the personalized configuration parameter includes shortcut key settings. Through synchronization of the personalized configuration parameter, it can be ensured that after the input device switches the focus device, the target host can synchronize a relevant personalized configuration parameter, for example, shortcut key settings of the input device, thereby facilitating a user operation.

In a possible implementation, the communication unit is specifically configured to: when the second input device is in the multi-connection working mode, maintain a communication connection to the first terminal device through a third MAC address and a communication connection to the second terminal device through a fourth MAC address. Communication connections to a plurality of terminal devices are maintained through different MAC addresses, so that a case in which the input device cannot be connected to the plurality of terminal devices simultaneously due to MAC preemption and the like can be avoided.

According to a sixth aspect not covered by the claimed invention, an input device, for example, a first input device, is provided. The first input device has a capability of providing a plurality of MAC addresses. The first input device includes: a communication interface, configured to send and receive a radio signal; a memory, configured to store computer program instructions; and a processor, configured to execute the computer program instructions, to support the first input device in implementing the method according to any one of the possible implementations of the second aspect.

According to a seventh aspect not covered by the claimed invention, an input device, for example, a second input device, is provided. The first input device has a capability of providing a plurality of MAC addresses. The second input device includes: a communication interface, configured to send and receive a radio signal; a memory, configured to store computer program instructions; and a processor, configured to execute the computer program instructions, to support the second input device in implementing the method according to any one of the possible implementations of the third aspect.

According to an eighth aspect, a communication system is provided. The communication system includes a first terminal device, a second terminal device, and the first input device according to any one of the possible implementations of the fourth aspect or the sixth aspect. The communication system is configured to implement the method according to any one of the possible implementations of the first aspect.

In a possible implementation, the communication system further includes the second input device according to any one of the possible implementations of the fifth aspect or the seventh aspect.

According to a ninth aspect not covered by the claimed invention, a computer-readable storage medium is provided. The computer-readable storage medium stores computer program instructions, and when the computer program instructions are executed by a processor, the method according to any one of the possible implementations of the second aspect or the third aspect is implemented.

According to a tenth aspect not covered by the claimed invention, a chip system is provided. The chip system includes a processor and a memory. The memory stores computer program instructions, and when the computer program instructions are executed by the processor, the method according to any one of the possible implementations of the third aspect or the fourth aspect is implemented. The chip system may include a chip, or may include a chip and another discrete component.

According to an eleventh aspect not covered by the claimed invention, a computer program product is provided. When the computer program product runs on a computer, the method according to any one of the possible implementations of the second aspect or the third aspect is implemented.

### BRIEF DESCRIPTION OF DRAWINGS

FIG. 1 is a diagram of an input device switching process according to the prior art;
FIG. 2 is a schematic of a hardware structure of a terminal device according to an embodiment of this application;
FIG. 3 is a block diagram of a structure of an input device according to an embodiment of this application;
FIG. 4 is a diagram of a button of a wireless mouse according to an embodiment of this application;
FIG. 5 is a diagram of two working modes of a wireless mouse according to an embodiment of this application;
FIG. 6 is a diagram of an interface for managing a multi-connection mode related configuration or operation according to an embodiment of this application;
FIG. 7 is an example diagram of an interface for managing a multi-connection related configuration or operation according to an embodiment of this application;
FIG. 8 is an example diagram of a communication connection between an input device and a terminal device according to an embodiment of this application;
FIG. 9A is a flowchart 1 of an input device connection method according to an embodiment of this application;
FIG. 9B is a flowchart 2 of an input device connection method according to an embodiment of this application;
FIG. 9C is a flowchart 3 of an input device connection method according to an embodiment of this application;
FIG. 9D is a flowchart 4 of an input device connection method according to an embodiment of this application;
FIG. 10 is an example diagram of a process in which a wireless mouse establishes a multi-connection according to an embodiment of this application;
FIG. 11 is a diagram of a multi-device connection configuration interface for a wireless mouse according to an embodiment of this application;
FIG. 12 is an example diagram 1 of modifying a multi-device connection configuration according to an embodiment of this application;
FIG. 13 is an example diagram 2 of modifying a multi-device connection configuration according to an embodiment of this application;
FIG. 14 is an example diagram 3 of modifying a multi-device connection configuration according to an embodiment of this application;
FIG. 15 is an example diagram 4 of modifying a multi-device connection configuration according to an embodiment of this application;
FIG. 16 is an example diagram 5 of modifying a multi-device connection configuration according to an embodiment of this application;
FIG. 17A to FIG. 17C are a flowchart 5 of an input device connection method according to an embodiment of this application;
FIG. 18A to FIG. 18C is an example diagram of another communication connection between an input device and a terminal device according to an embodiment of this application;
FIG. 19 is a flowchart 6 of an input device connection method according to an embodiment of this application; and
FIG. 20 is a block diagram of a structure of an input device according to an embodiment of this application.

### DESCRIPTION OF EMBODIMENTS

In the following description, although numerous features may be designated as optional, it is nevertheless acknowledged that all features defined by the independent claims are not to be read as optional. The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the description of embodiments, unless otherwise specified, "a plurality of" means two or more.

It may be understood that the terminal device may be generally connected to one or more input devices (for example, an input peripheral), to implement a corresponding function. For example, a personal computer (personal computer, PC) may be connected to a mouse, and functions such as moving a cursor on a PC display and further opening/deleting a file are implemented through the mouse. The PC may alternatively be connected to a keyboard, and functions such as moving a cursor on a PC display, entering characters, and further opening/deleting a file are implemented through the keyboard. For another example, a tablet computer may be connected to a keyboard, and functions such as entering characters to the tablet computer and opening an application/a video/an audio in the tablet computer are implemented through the keyboard.

Based on a conventional method, when a user simultaneously uses a plurality of terminal devices, because the user needs to carry and maintain input devices matching the plurality of terminal devices, or the user needs to manually disconnect/reconfigure a connection relationship between the input device and the terminal device, a process in which the user controls the plurality of devices is very complex and inefficient.

To provide more convenient multi-device operation experience, in an implementation, the input device may be controlled to switch between a plurality of devices, so as to implement flexible operations or control on a plurality of terminal devices by using a set of input devices.

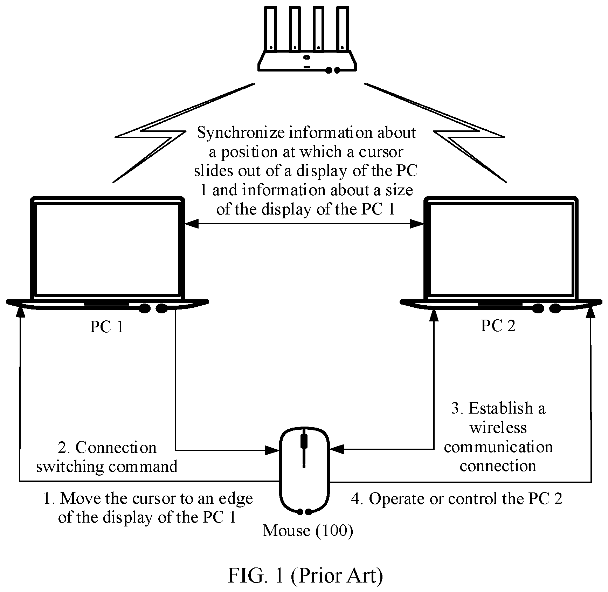

For example, FIG. 1 is a diagram of an input device switching process. As shown in FIG. 1, both a PC 1 and a PC 2 are connected to a same wireless local area network (wireless local area network, WLAN). In an initial state, a mouse 100 establishes a wireless communication connection (for example, a Bluetooth connection) to the PC 1 to operate or control the PC 1. When a cursor position of the mouse 100 on a display of the PC 1 moves to an edge of the display of the PC 1, the PC 1 sends a connection switching command to the mouse 100, to instruct the mouse 100 to switch a host connected to the mouse 100. It is assumed that the PC 1 instructs the mouse to switch to the PC 2. Further, as shown in FIG. 1, the mouse 100 establishes a wireless communication connection (for example, a Bluetooth connection) to the PC 2. In this case, the mouse 100 switches from the PC 1 to the PC 2, and the mouse 100 may operate or control the PC 2.

In addition, as shown in FIG. 1, the PC 1 may synchronize, to the PC 2 based on the connected WLAN, a position at which a mouse cursor slides out of the display of the PC 1, so that the PC 2 determines an initial cursor position indicated by the mouse 100 on a display of the PC 2.

In the method shown in FIG. 1, the mouse 100 (that is, an input device) is indicated, through screen cursor edge detection, to disconnect a communication connection to a source host, and establish a communication connection to a target host, so as to implement host switching. Further, in the method shown in FIG. 1, automatic traversal of the cursor between terminal devices may be implemented through information exchange between hosts. It can be learned that, based on the method shown in FIG. 1, the user needs to carry only a set of input devices, so that the user can randomly switch between a plurality of terminal devices to perform operations based on an actual requirement.

However, for the input device switching method shown in FIG. 1, the mouse 100 can establish a communication connection to only one host at a same moment. For example, in the initial state shown in FIG. 1, the mouse 100 establishes a communication connection to only the PC 1. After the mouse 100 shown in FIG. 1 establishes a communication connection to the PC 2, the mouse 100 establishes the communication connection to only the PC 2. In addition, for the input device switching method shown in FIG. 1, because the PC 1 and the PC 2 need to synchronize information based on a same WLAN, the method is highly dependent on the WLAN. In addition, the PC 1 and the PC 2 synchronize information only after the mouse 100 establishes the wireless communication connection to the PC 2. Therefore, information synchronization between hosts cannot be performed in real time. As a result, in this method, a switching delay of the input device is high, and the high switching delay causes interface display freezing.

To resolve the foregoing problem and provide more intelligent multi-device operation experience, an embodiment of this application provides an input device connection method. The method may be applied to a multi-device (that is, multi-terminal) interconnection and interworking scenario, to implement random migration of a same input device between a plurality of devices.

In an example, in this embodiment of this application, the input device is, for example, a wireless peripheral. The wireless peripheral is an input device that implements input to the terminal device based on a wireless transmission protocol (for example, a Bluetooth protocol or a 2.4G communication protocol).

In this embodiment of this application, an input manner supported by the input device may include but is not limited to a key manner (for example, a mouse or a keyboard), a scrolling wheel manner (for example, a mouse), a gesture input manner, a body language input manner, a voice input manner, an emoticon input manner, and an eye movement input manner.

Further, a specific manner of communication between the input device and the terminal device is not limited in embodiments of this application. For example, the input device is a Bluetooth peripheral. The Bluetooth peripheral may communicate with the terminal device based on a Bluetooth protocol that supports an inter-device multi-connection protocol stack, to implement migration from one terminal device to another terminal device.

In this embodiment of this application, that the input device migrates from one terminal device to another terminal device specifically means that a focus device of the input device is switched from one terminal device (that is, the source host) to another terminal device (that is, the target host). After the input device migrates from one terminal device (that is, the source host) to another terminal device (that is, the target host), a communication connection between the input device and the source host is not disconnected. A focus device is a terminal device that establishes a communication connection to an input device and can be directly controlled by the input device currently. A non-focus device is a terminal device that establishes a communication connection to an input device but cannot be directly controlled by the input device currently. A process in which the input device migrates from the PC 1 (that is, the source host) to the PC 2 (that is, the target host) is used as an example. Before the migration, the focus device of the input device is the PC 1; and after the migration, the focus device of the input device is the PC 2. Before the migration, the input device is configured to control the PC 1; after the migration, the input device is configured to control the PC 2.

The terminal device in embodiments of this application may include but is not limited to a personal computer (personal computer, PC), a smartphone, a netbook, a tablet computer, a smart camera, a palmtop computer, a smart television, a personal digital assistant (personal digital assistant, PDA), a portable multimedia player (portable multimedia player, PMP), a projection device, a smart screen device, an augmented reality (augmented reality, AR)/a virtual reality (virtual reality, VR) device, a mixed reality (mixed reality, MR) device, a television, or a somatic game console in a human-computer interaction scenario. A specific function and structure of the terminal device are not limited in this application.

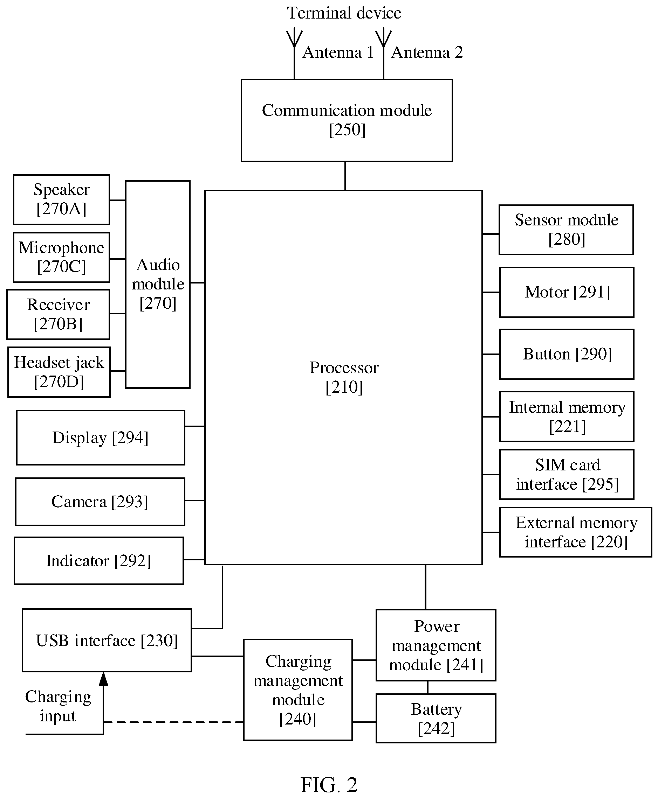

FIG. 2 is a schematic of a hardware structure of a terminal device according to an embodiment of this application. As shown in FIG. 2, the terminal device may include a processor 210, a memory (including an external memory interface 220 and an internal memory 221), a universal serial bus (universal serial bus, USB) interface 230, a charging management module 240, a power management module 241, a battery 242, an antenna 1, an antenna 2, a communication module 250, an audio module 260, a speaker 270A, a receiver 270B, a microphone 270C, a headset jack 270D, a sensor module 280, a button 290, a motor 291, an indicator 292, a camera 293, a display 294, and the like.

It may be understood that the structure shown in this embodiment of the present invention does not constitute a specific limitation on the terminal device. In some other embodiments of this application, the terminal device may include more or fewer components than those shown in the figure, or some components may be combined, or some components may be split, or different component arrangements may be used. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a flight controller, a video codec, a digital signal processor (digital signal processor, DSP), a baseband processor, and/or a neural-network processing unit (neural-network processing unit, NPU). Different processing units may be independent components, or may be integrated into one or more processors.

A memory may be further disposed in the processor 210, and is configured to store instructions and data. In some embodiments, the memory in the processor 210 is a cache memory. The memory may store instructions or data just used or cyclically used by the processor 210. If the processor 210 needs to use the instructions or the data again, the processor 210 may directly invoke the instructions or the data from the memory. This avoids repeated access, reduces waiting time of the processor 210, and improves system efficiency.

In this embodiment of this application, the processor 210 may include one or more micro control units (micro control units, MCUs), configured to be responsible for unified scheduling of coordinated scheduling of all other modules/time sequences/transactions related to input device migration, and the like.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 240 is configured to receive a charging input from a charger. The power management module 241 is configured to connect to the battery 242, the charging management module 240, and the processor 210. The power management module 241 receives an input from the battery 242 and/or the charging management module 240, and supplies power to the processor 210, the internal memory 221, the display 294, the camera 293, the communication module 250, and the like.

A wireless communication function of the terminal device may be implemented through the antenna 1, the antenna 2, the communication module 250, the modem processor, the baseband processor, and the like.

The antenna 1 and the antenna 2 are configured to transmit and receive an electromagnetic wave signal. Each antenna in the terminal device may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The communication module 250 can provide a solution to wireless communication that is applied to the terminal device and that includes 2G/3G/4G/5G/6G or the like. The communication module 250 may include at least one filter, a switch, a power amplifier, a low noise amplifier (low noise amplifier, LNA), and the like. The communication module 250 may receive an electromagnetic wave through the antenna 1, perform processing such as filtering or amplification on the received electromagnetic wave, and transmit the electromagnetic wave to the modem processor for demodulation. The communication module 250 may further amplify a signal modulated by the modem processor, and convert the signal into an electromagnetic wave for radiation through the antenna 1. In some embodiments, at least some function modules in the communication module 250 may be disposed in the processor 210. In some embodiments, at least some function modules in the communication module 250 may be disposed in a same component as at least some modules in the processor 210.

In some embodiments, the communication module 250 may further provide a solution to wireless communication that is applied to the terminal device and that includes a WLAN (for example, a Wi-Fi network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The communication module 250 may be one or more components integrating at least one communication processor module. The communication module 250 receives an electromagnetic wave through the antenna 2, performs frequency modulation and filtering processing on the electromagnetic wave signal, and sends a processed signal to the processor 210. The communication module 250 may further receive a to-be-sent signal from the processor 210, perform frequency modulation and amplification on the signal, and convert the signal into an electromagnetic wave for radiation through the antenna 2.

In this embodiment of this application, the communication module 250 may include a Bluetooth module. The Bluetooth module may be configured to be responsible for sending a Bluetooth packet, to implement interaction with a plurality of input devices based on a Bluetooth connection.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio apparatus (which is not limited to the speaker 270A, the receiver 270B, or the like), or displays an image or a video on the display 294. In some embodiments, the modem processor may be an independent component. In some other embodiments, the modem processor may be independent of the processor 210, and is disposed in a same component as the communication module 250 or another function module.

In this embodiment of this application, the terminal device may communicate with another terminal device based on the communication module 250, the antenna 1, and/or the antenna 2, for example, send a control instruction to the another terminal device.

In some embodiments, the antenna 1 of the terminal device is coupled to the communication module 250, and the antenna 2 is coupled to the communication module 250, so that the terminal device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), new radio (new radio, NR), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal device implements a display function by using the GPU, the display 294, the application processor, and the like. The GPU is a microprocessor for image processing, and is connected to the display 294 and the application processor. The GPU is configured to: perform mathematical and geometric computation, and render an image. The processor 210 may include one or more GPUs that execute program instructions to generate or change displayed information.

The display 294 is configured to display an image, a video, and the like, for example, a teaching video and a user action picture video in embodiments of this application. The display 294 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like.

In this embodiment of this application, the terminal device may render an interface through the GPU, display an interface on the display 294, and the like.

For example, in this embodiment of this application, the interface displayed on the display 294 may include a cursor, characters input by the input device, and the like.

The terminal device may implement a photographing function by using the ISP, the camera 293, the video codec, the GPU, the display 294, the application processor, and the like.

The external memory interface 220 may be configured to connect to an external storage card, for example, a micro (micro) storage card (storage card, SD), to extend a storage capability of the terminal device. The external memory card communicates with the processor 210 through the external memory interface 220, to implement a data storage function. For example, files such as music and videos are stored in the external storage card.

The internal memory 221 may be configured to store executable program code of a computer program. For example, the computer program may include an operating system program and an application. The operating system may include but is not limited to Symbian^{®} (Symbian^{®}), Android^{®} (Android^{®}), Microsoft^{®} Windows^{®}, Apple iOS^{®}, Blackberry^{®} (Blackberry^{®}), and Harmony^{®} (Harmony^{®}) OS. The executable program code includes the instructions. The internal memory 221 may include a program storage area and a data storage area. The program storage area may store an operating system, an application required by at least one function, and the like. The data storage area may store data (for example, application data and user data) and the like created when the terminal device is used. In addition, the internal memory 221 may include a highspeed random access memory, or may include a nonvolatile memory such as at least one disk storage device, a flash memory, or a universal flash storage (universal flash storage, UFS). The processor 210 runs the instruction stored in the internal memory 221 and/or the instruction stored in the memory disposed in the processor, to perform various function applications of the terminal device and data processing.

The sensor module 280 may sense an operation of the user, for example, a touch operation, a tap operation, a slide operation, or the user approaching a screen.

The terminal device may implement audio functions such as music playing and recording by using the audio module 260, the speaker 270A, the receiver 270B, the microphone 270C, the application processor, and the like. For specific working principles and functions of the audio module 260, the speaker 270A, the receiver 270B, and the microphone 270C, refer to descriptions in a conventional technology.

The button 290 includes a power button, a volume button, or the like. The button 290 may be a mechanical button, or may be a touch button. The terminal device may receive a button input, and generate a button signal input related to a user setting and function control of the terminal device.

It should be noted that the hardware modules included in the terminal device shown in FIG. 2 are merely described as an example, and do not limit a specific structure of the terminal device.

In this embodiment of this application, the input device may include but is not limited to a wireless mouse, a wireless keyboard, a wireless trackball, a wireless touchpad, a wireless stylus, a wireless pen, an intelligent wearable device (for example, a smartwatch, a smart band, smart glasses, or a watch phone), a wireless headset, a game peripheral, or any other device that can provide an input for the terminal device. This is not limited in this application.

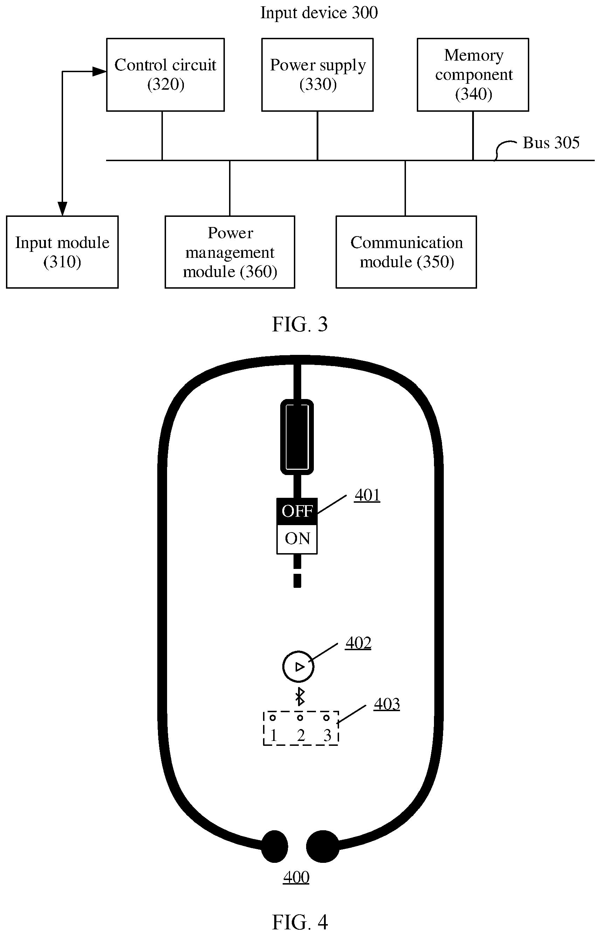

FIG. 3 is a block diagram of a structure of an input device according to an embodiment of this application. As shown in FIG. 3, the input device 300 may include a bus 305, an input module 310, a control circuit 320, a power supply 330, a memory component 340, a communication module 350, and a power management module 360.

The power supply 330 is configured to supply power to the input device 300. The power management module 360 may directly route power from the power supply 330 to another component of the input device 300. The power management module 360 may further distribute the power from the power supply 330 to another system component (for example, the control circuit 320, the communication module 350, and the input module 310, or any combination thereof).

In some embodiments, the control circuit 320, the power supply 330, the memory component 340, the communication module 350, and the power management module 360 may communicate with each other through the bus 305. The input module 310 may be independently connected to the control circuit 320 and the power management module 360.

In some embodiments, the input module 310 may be connected to another module through the bus 305.

In some embodiments, the input module 310 may be configured to receive inputs from a plurality of key input elements or devices. In some embodiments, the input module 310 may be operated to receive an input in response to pressing the following components by the user. The components include a key (for example, a letter key, a function key (for example, a volume key, an exit key, a mute key, or a shift key), a numeric key or a numeric keypad key, an operating system selection key, a right mouse button, or a left mouse button), or another appropriate input element or device, for example, a media control button, a voice over internet protocol (voice over internet phone, VOIP) button, or a touch sensor (for example, a touchpad, or a stylus). The input module 310 can generate character data associated with the pressed key input element, and send the character data to the control circuit 320. For example, if the input device is a wireless keyboard, the input module 310 may include a keyboard key; or if the input device is a wireless mouse, the input module 310 may include a mouse sensor and a cursor module, where the cursor module is configured to be responsible for mouse cursor movement and inputs.

In an implementation of this application, a key code sent by the input device 300 to the terminal device depends on an operating system running on the terminal device. Behavior of the input device 300 depends on the operating system. Different key codes corresponding to a plurality of key input elements may be specified by the operating system. For example, selecting a "Home" key on different operating systems enables different functions (For example, selecting the "Home" key in iOS^{®} enables a home screen, but selecting the "Home" key in Windows^{®} enables a home page of a browser).

In some embodiments, the control circuit 320 may include one or more micro-processors (micro-processors), and the control circuit 320 may be configured to control an operation of the input device 300. The control circuit 320 may be configured to be responsible for unified scheduling of coordinated scheduling of all other modules/time sequences/transactions, management of input device configuration information, management of input device migration, and the like. In some embodiments, the control circuit 320 may include one or more MCUs, a digital signal processor (DSP), a field-programmable gate array (field-programmable gate array, FPGA), a programmable logic device (programable logic device, PLD), and the like that support hardware/firmware (for example, a memory, a programmable input/output (input/output, I/O), and the like).

The memory component 340 may be configured to store data. In some embodiments, the data may include connection data and pairing data, and the connection data and the pairing data include, for example, an address of a selected terminal device. In some embodiments, the memory component 340 may be a non-volatile memory.

The communication module 350 may be configured to provide an I/O capability for the input device 300. For example, the communication module 350 may route data from the input module 310 to the terminal device and route data from the terminal device to the input module 310 through a wireless connection. The wireless connection may be a Bluetooth connection or a communication connection based on any other wireless standard or dedicated wireless network protocol. For example, the communication module 350 may include a Bluetooth module. The Bluetooth module may be configured to be responsible for sending a Bluetooth packet, to implement Bluetooth connection interaction with a plurality of terminal devices.

It should be noted that the structure included in the input device 300 shown in FIG. 3 is merely an example for description, and does not limit a specific structure of the input device 300.

In this embodiment of this application, the input device has a capability of simultaneously maintaining communication connections to a plurality of devices. In an example, in this embodiment of this application, the input device may work in a normal mode, or may work in a multi-connection mode. The multi-connection mode is a working mode in which communication connections are simultaneously maintained to a plurality of terminal devices. Comparatively, the normal mode is a working mode in which a communication connection is maintained to only a single terminal device. In this embodiment of this application, the input device in the multi-connection mode simultaneously maintains communication connections to a plurality of terminal devices, so that the input device can implement seamless synchronous migration of a focus between the plurality of terminal devices.

Further, in this embodiment of this application, the input device has a capability of providing a plurality of media access control (media access control, MAC) addresses.

Further, in this embodiment of this application, the input device has a capability of maintaining communication connections to a plurality of devices through a plurality of MAC addresses. One MAC address may be used by the input device to establish a communication connection to one terminal device and perform subsequent communication.

In an example, a multi-device connection shortcut switch may be disposed on the input device, so that when the user has a requirement for cross-device focus migration of the input device, a multi-device connection function can be enabled by using the shortcut switch in one click. After the input device in the normal mode receives an operation of enabling the multi-device connection function by the user, the input device enters the multi-connection mode from the normal mode. After the input device in the multi-connection mode receives an operation of disabling the multi-device connection function by the user, the input device enters the normal mode from the multi-connection mode.

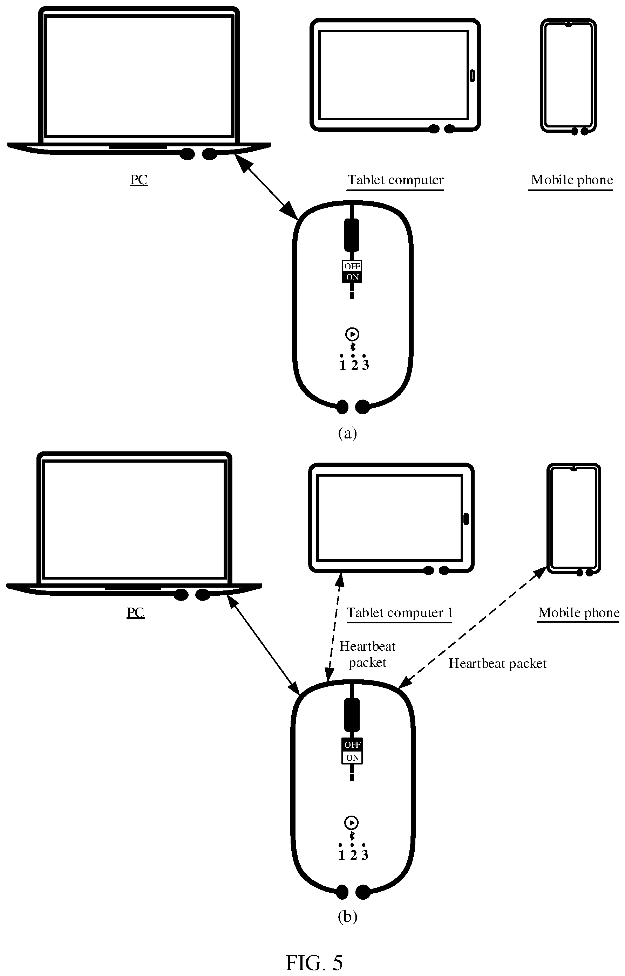

A wireless mouse is used as an example in FIG. 4. FIG. 4 is a diagram of a button of a wireless mouse according to an embodiment of this application. As shown in FIG. 4, a multi-device connection shortcut switch 401 is disposed on a wireless mouse 400. After the wireless mouse 400 in a normal mode receives an operation of turning on the multi-device connection shortcut switch 401 shown in FIG. 4, the wireless mouse 400 enters a multi-connection mode shown in (b) in FIG. 5 from the normal mode shown in (a) in FIG. 5 and simultaneously establishes a wireless connection or wireless connections to one or more other terminal devices (for example, a PC, a tablet computer, and a mobile phone shown in (b) in FIG. 5) while maintaining a Bluetooth connection to a focus device.

In some embodiments, after the wireless mouse 400 in the multi-connection mode receives an operation of turning off the multi-device connection shortcut switch 401 shown in FIG. 4 by the user, the wireless mouse 400 restores to the normal mode shown in (a) in FIG. 5 from the multi-connection mode shown in (b) in FIG. 5, and establishes a connection to only a single terminal (for example, a PC shown in (a) in FIG. 5).

In some embodiments, after the input device enters the multi-connection mode, a terminal device that can be connected to the input device may include but is not limited to one or more of the following: a terminal device discovered by the input device, a terminal device that is connected to the input device in the multi-connection mode last time, a terminal device that is frequently connected to the input device in a preset time period, a terminal device manually selected by the user, a terminal device (for example, a terminal device that is close to the input device) determined by the input device, and the like. This is not limited in embodiments of this application.

For example, the input device is a Bluetooth peripheral. In a possible implementation, after the input device enters the multi-connection mode, that the input device establishes a wireless connection or wireless connections to one or more terminal devices other than the focus device may include: The input device discovers, based on device discovery (for example, near field discovery or discovery of devices that log in to a same account), one or more connectable terminal devices around, and performs authentication and pairing to establish a wireless connection or wireless connections to the one or more terminal devices.

For example, the input device may switch a Bluetooth channel, send a Bluetooth proximity discovery pairing broadcast, to discover a connectable terminal device around. Further, if a terminal device receives an operation of tapping to confirm a Bluetooth connection by the user, the terminal device completes Bluetooth pairing with the input device, and establishes the Bluetooth connection.

In another possible implementation, that the input device establishes a wireless connection or wireless connections to one or more terminal devices other than the focus device after the input device enters the multi-connection mode may include: The input device is reconnected to the one or more terminal devices that are previously connected. It may be understood that, after the input device enters the multi-connection mode, for the one or more terminal devices that are previously connected to the input device, the input device does not need to perform device discovery, authentication, and pairing again, but may directly perform reconnection based on stored pairing information.

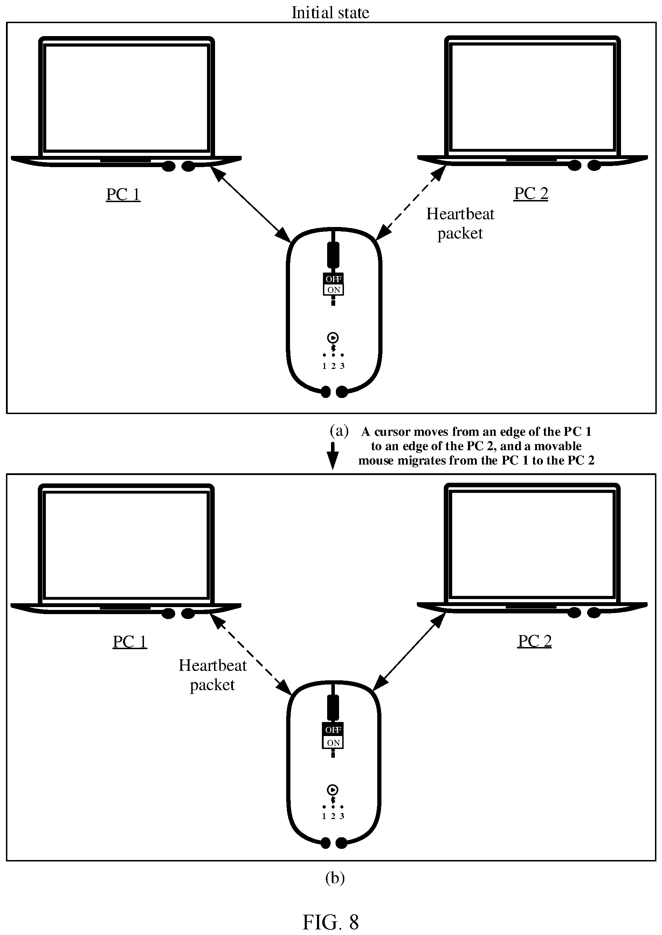

After the input device enters the multi-connection mode, the terminal device connected to the input device includes a focus device and a non-focus device. As shown in (a) in FIG. 8, the wireless mouse maintains communication connections to both a PC 1 and a PC 2. The PC 1 is a focus device of the wireless mouse, and the PC 2 is a non-focus device of the wireless mouse. The wireless mouse maintains a communication connection to the PC 2 (that is, the non-focus device) by sending a heartbeat packet. In addition, as shown in (b) in FIG. 8, after the focus of the wireless mouse migrates from the PC 1 to the PC 2, the wireless mouse still maintains the communication connections to both the PC 1 and the PC 2. The PC 2 is the focus device of the wireless mouse, and the PC 1 is the non-focus device of the wireless mouse. The wireless mouse maintains a communication connection to the PC 1 (that is, the non-focus device) by sending a heartbeat packet.

It should be noted that FIG. 4 shows a manner of enabling the multi-device connection function by one click by using only an example in which the multi-device connection shortcut switch is set on the input device. However, a specific manner of enabling the multi-device connection function is not limited in this application. For example, the user may further perform an operation on a user interface (user interface, UI) (which is referred to as a UI interface for short below) on a focus device connected to the input device, to complete setting a related configuration of the input device, including enabling the multi-device connection function of the input device.

In some embodiments, an application (for example, a smart home application or a device manager application) used to manage a multi-connection mode related configuration or operation may be installed on the focus device connected to the input device, or an application installed on the focus device connected to the input device integrates an applet used to manage a multi-connection related configuration or operation, or an operating system of the focus device connected to the input device integrates a native function module used to manage a multi-connection related configuration or operation. Based on this, for example, the UI interface may be an interface of the application that is installed on the focus device and that is used to manage a multi-connection mode related configuration or operation, or may be an interface of the applet that is run on the focus device and that is used to manage a multi-connection mode related configuration or operation, or may be a native function interface of the focus device. This is not limited in embodiments of this application.

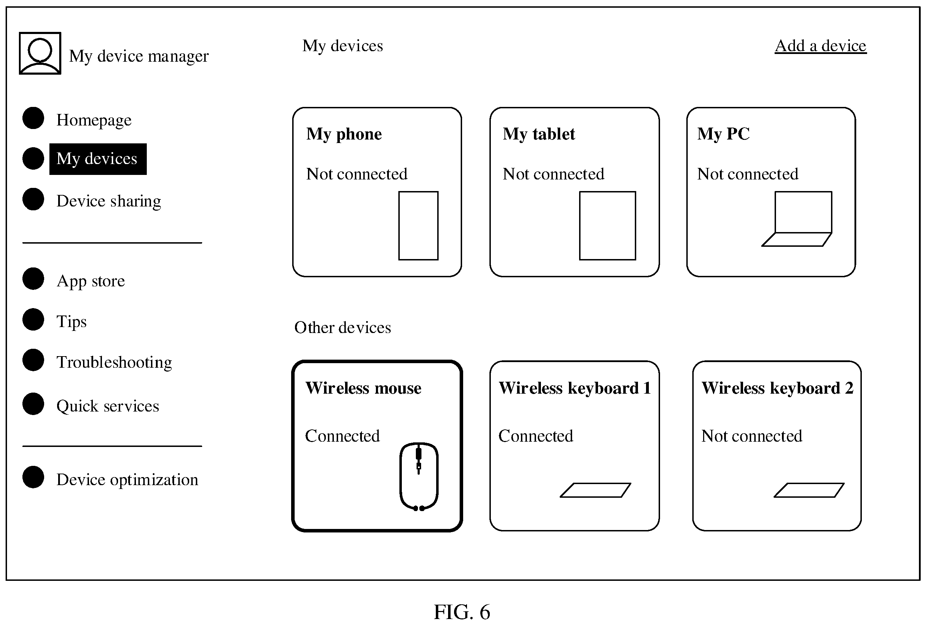

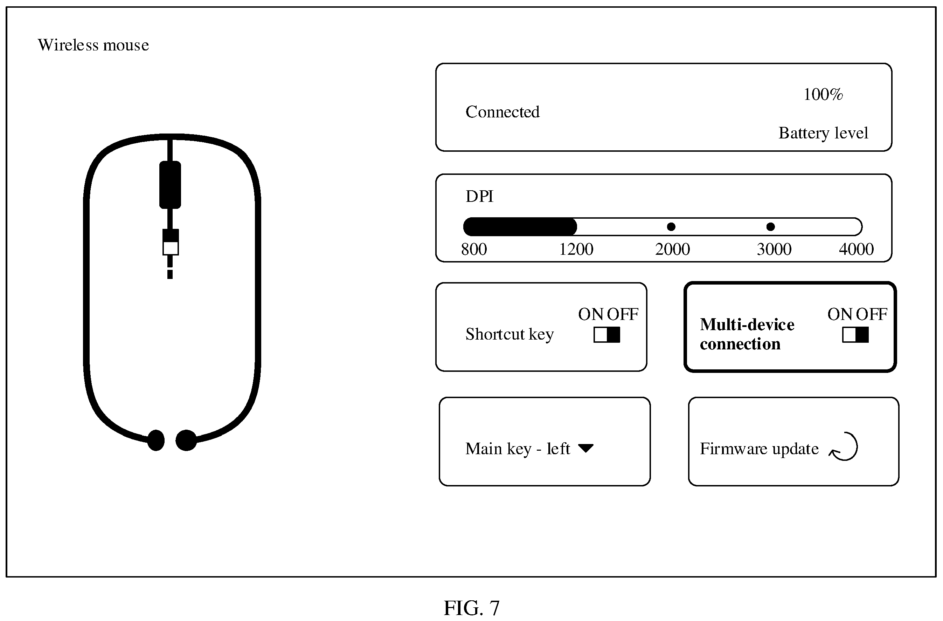

A device manager application is used as an example in FIG. 6. FIG. 6 is a diagram of a UI interface for managing a multi-connection mode related configuration or operation according to an embodiment of this application. In this embodiment of this application, a UI interface used to manage a related configuration or operation of a wireless mouse multi-connection mode may be a lower-level interface (a UI interface shown in FIG. 7) of a "Wireless mouse" control shown in FIG. 6. In the UI interface shown in FIG. 7, a "Multi-device connection" switch is used to control enabling or disabling of the multi-device connection function of the wireless mouse.

In an example, after the input device enters the multi-connection mode, a communication connection between the input device and the non-focus device may be maintained in a background. For example, as shown in (b) in FIG. 5, after the input device (a wireless mouse shown in (b) in FIG. 5) enters the multi-connection mode, the communication connection between the input device and the non-focus device may be maintained by sending a heartbeat packet. In this embodiment of this application, that a device sends a heartbeat packet may be periodically sending the heartbeat packet based on a heartbeat moment indicated by a system heartbeat clock, or may be sending the heartbeat packet that is triggered by an input event (for example, an event of modifying a multi-device connection related configuration is received). This is not limited in this application. The system heartbeat clock is a heartbeat clock that is set and started by the operating system when a device (for example, the non-focus device) is powered on and that uses a fixed duration as a cycle.

It should be noted that, in this embodiment of this application, a communication protocol based on which a communication connection between the input device and the terminal device is established supports a multi-connection protocol stack. For example, the communication protocol is a Bluetooth protocol or a 2.4G communication protocol. In an example in which the input device communicates with the terminal device based on the Bluetooth protocol, the Bluetooth protocol that supports the multi-connection protocol stack is, for example, a Bluetooth 5.0 protocol or a next-generation protocol version of the Bluetooth 5.0 protocol. For specific details of supporting the multi-connection protocol stack in the communication protocol, refer to specific improvement details in the protocol (for example, the Bluetooth 5.0 protocol).

In a possible structure, a Bluetooth connection switch (for example, 402 shown in FIG. 4) may be further disposed on the input device. The Bluetooth connection switch is used by the user to trigger a Bluetooth connection between the input device and the terminal device. For example, in this embodiment of this application, in response to receiving an operation of turning on, by the user, the Bluetooth connection switch (for example, 402 shown in FIG. 4), the input device may perform device discovery to connect to one or more other terminal devices, or the input device may be reconnected to one or more terminal devices that are previously connected.

In some embodiments, after the input device enters the multi-connection mode, a quantity of terminal devices that can be connected to the input device may be determined based on a Bluetooth channel configuration of the input device. One Bluetooth channel of the input device may be allocated to one terminal device, and is used for communication between the terminal device and the input device.

Further, in this embodiment of this application, a plurality of Bluetooth channels of the input device may communicate with corresponding terminal devices through a plurality of MAC addresses of the input device.

In a possible structure, a Bluetooth channel indicator (for example, 403 shown in FIG. 4) may be further disposed on the input device. The Bluetooth channel indicator is used to display a Bluetooth channel that is successfully connected and a Bluetooth channel that is not successfully connected. For example, if a Bluetooth channel indicator is on, it indicates that a terminal device corresponding to the Bluetooth channel is successfully connected; and if a Bluetooth channel indicator is off, it indicates that a terminal device corresponding to the Bluetooth channel is not successfully connected. Alternatively, if a Bluetooth channel indicator displays a color 1, it indicates that a terminal device corresponding to the Bluetooth channel is successfully connected; and if a Bluetooth channel indicator displays a color 2, it indicates that a terminal device corresponding to the Bluetooth channel is not successfully connected.

An example in which the input device is a wireless mouse is used below to describe in detail an input device connection method provided in embodiments of this application with reference to the accompanying drawings. The wireless mouse is initially in a normal mode, and the wireless mouse establishes a wireless communication connection to a first terminal device (which is referred to as a first device for short below).

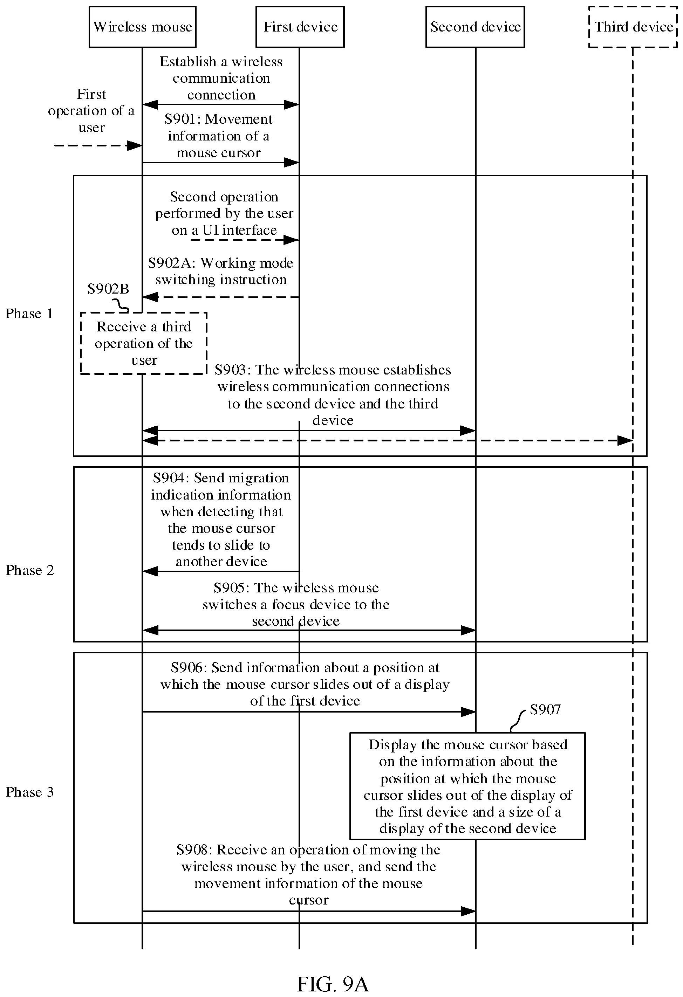

FIG. 9A is a flowchart of an input device connection method according to an embodiment of this application. Initially, the wireless mouse is in the normal mode. As shown in S901 in FIG. 9A, the wireless mouse receives a first operation of a user, and sends movement information of a mouse cursor to the first device. The first operation is, for example, an operation of moving the wireless mouse.

In an example, the wireless mouse may include a mouse sensor, a cursor module, and a Bluetooth module. The wireless mouse may detect, by using the mouse sensor, the operation of moving the wireless mouse by the user. Further, the wireless mouse may obtain movement information like a movement position of the mouse cursor by using the cursor module. Further, the wireless mouse may send the movement information of the mouse cursor to the first device by using the Bluetooth module based on a Bluetooth connection between the wireless mouse and the first device.

As shown in FIG. 9A, the input device connection method provided in this embodiment of this application may include the following three phases.

### Phase 1: Enter a multi-connection mode.

For example, after the user enables a multi-device connection function of the wireless mouse, the wireless mouse may enter the multi-connection mode from the normal mode.

### Phase 2: Focus migration of the input device.

For example, when detecting that the mouse cursor tends to slide to another device, a source host indicates the wireless mouse to perform focus device switching.

### Phase 3: Continued input after focus migration.

For example, after the wireless mouse completes focus device switching, a target host receives information input by the input device instead.

The following specifically describes, with reference to a plurality of cases, an input device connection method provided in an embodiment of this application.

In an example in which the user spontaneously enables the multi-device connection function of the wireless mouse, the following case 1 and case 2 exist.

Case 1: In an example in which the user spontaneously enables the multi-device connection function of the wireless mouse on a UI interface used to manage a multi-connection mode related configuration or operation, the phase 1 may include S902A and S903 shown in FIG. 9A, the phase 2 may include S904 and S905 shown in FIG. 9A, and the phase 3 may include S906 to S908 shown in FIG. 9A.

Case 2: In an example in which the user spontaneously enables the multi-device connection function of the wireless mouse by using a multi-device connection shortcut switch that is set on the wireless mouse, after receiving an operation of enabling the multi-device connection function of the wireless mouse by the user by using the multi-device connection shortcut switch that is set on the wireless mouse, the wireless mouse may directly enter the multi-connection mode, and establish wireless communication connections to a second terminal device (which is referred to as a second device for short below) and a third terminal device (which is referred to as a third device for short below). That is, the phase 1 may include S902B and S903 shown in FIG. 9A, the phase 2 may include S904 and S905 shown in FIG. 9A, and the phase 3 may include S906 to S908 shown in FIG. 9A.

In an example in which the user enables the multi-device connection function of the wireless mouse based on a prompt of the first device, the following case 3 and case 4 exist.

Case 3: In an example in which the user enables, based on the prompt of the first device, the multi-device connection function of the wireless mouse on the UI interface used to manage a multi-connection mode related configuration or operation, the phase 1 may include S902A and S903 shown in FIG. 9A, the phase 2 may include S904 and S905 shown in FIG. 9A, and the phase 3 may include S906 to S908 shown in FIG. 9A.

Case 4: In an example in which the user enables the multi-device connection function of the wireless mouse based on the prompt of the first device by using a multi-device connection shortcut switch that is set on the wireless mouse, after receiving an operation of enabling the multi-device connection function of the wireless mouse by the user by using the multi-device connection shortcut switch that is set on the wireless mouse, the wireless mouse may directly enter the multi-connection mode, and establish wireless communication connections to the second device and the third device. That is, the phase 1 may include S902B and S903 shown in FIG. 9A, the phase 2 may include S904 and S905 shown in FIG. 9A, and the phase 3 may include S906 to S908 shown in FIG. 9A.

The first device may prompt (for example, a pop-up prompt or a voice prompt) the user to enable the multi-device connection function of the wireless mouse when detecting that the mouse cursor slides to an edge of a screen and still tends to slide out of the edge.

In an example in which the wireless mouse directly enters the multi-device connection mode based on an indication of the first device, the following case 5 exists.

Case 5: The first device may indicate the wireless mouse to enter the multi-connection mode when detecting that the mouse cursor slides to the edge of the screen and still tends to slide out of the edge. That is, the phase 1 may include S903 shown in FIG. 9A, the phase 2 may include S904 and S905 shown in FIG. 9A, and the phase 3 may include S906 to S908 shown in FIG. 9A. S903 specifically includes: After receiving indication information indicating the first device to enter the multi-connection mode, the wireless mouse enters the multi-connection mode, and establishes wireless communication connections to the second device and the third device.

S902A, S902B, and S903 to S908 are specifically as follows:
S902A: The first device sends a working mode switching instruction to the wireless mouse when receiving a second operation performed by the user on the UI interface.

The UI interface is, for example, a UI interface used to manage a multi-connection mode related configuration or operation. The second operation is, for example, an operation of enabling the multi-device connection function of the wireless mouse. The working mode switching instruction instructs the wireless mouse to switch to the multi-connection mode, for example, switch from the common mode to the multi-connection mode.

In an example, the first device may provide an option used by the user to select the multi-device connection function of the wireless mouse, so that the user performs setting based on an actual requirement.

S902B: The wireless mouse receives a third operation of the user.

The third operation is an operation of turning on the multi-device connection shortcut switch set on the wireless mouse.

S903: The wireless mouse establishes wireless communication connections to the second device and the third device.

After the wireless mouse receives the third operation of the user or receives the working mode switching instruction from the first device, the wireless mouse enters the multi-connection mode, and establishes the wireless communication connections to the second device and the third device. After the wireless mouse enters the multi-connection mode and establishes the wireless communication connections to the second device and the third device, the first device is a focus device of the wireless mouse, and the second device and the third device are non-focus devices of the wireless mouse. In other words, the wireless mouse may directly control the first device currently.

In a possible implementation, the wireless mouse may establish the wireless communication connection to the second device through the first MAC address and perform subsequent communication, and establish the wireless communication connection to the third device through the second MAC address and perform subsequent communication.

For example, the wireless mouse is a Bluetooth mouse. In a possible implementation, if the wireless mouse has not performed Bluetooth pairing with neither the second device nor the third device previously, that the wireless mouse establishes the wireless communication connections to the second device and the third device may include: First, the wireless mouse discovers the second device and the third device that are connectable around. Then, the wireless mouse performs authentication on both the second device and the third device. Finally, after the authentication succeeds, the wireless mouse separately performs pairing with the second device and the third device, to establish Bluetooth connections to the second device and the third device.

In another possible implementation, if the wireless mouse has successfully performed Bluetooth pairing with the second device or the third device previously, for example, the wireless mouse has previously established a Bluetooth connection to the second device or the third device, that the wireless mouse establishes a wireless communication connection to the second device may include: The wireless mouse is directly reconnected to the second device based on previously stored pairing information; and that the wireless mouse establishes a wireless communication connection to the third device may include: The wireless mouse is directly reconnected to the third device based on previously stored pairing information.

In an example, the wireless mouse may maintain communication connections to the second device and the third device in a background. For example, the wireless mouse may maintain communication connections to the second device and the third device by sending a heartbeat packet.

In a possible implementation, after the wireless mouse enters the multi-connection mode and establishes the wireless communication connections to the second device and the third device, the first device may detect a position of the mouse cursor on a display of the first device in real time, to send migration indication information to the wireless mouse when detecting that the mouse cursor tends to slide to another terminal device (that is, perform the following S904).

In some embodiments, if the wireless mouse has successfully performed Bluetooth pairing with the second device and the third device previously, in consideration of device and information security, after the wireless mouse is reconnected to the second device and the third device based on the previously stored pairing information, the wireless mouse may notify the second device and the third device that the wireless mouse is currently in the multi-connection mode. Further, in some embodiments, after receiving the notification that the wireless mouse is currently in the multi-connection mode, both the second device and the third device may notify (for example, a pop-up notification) the user that related permission of the wireless mouse in the multi-connection mode has been granted to support the multi-connection function of the wireless mouse.

In some other embodiments, after receiving the notification that the wireless mouse is currently in the multi-connection mode, both the second device and the third device may pop up a window for the user to choose whether to grant related permission of the wireless mouse in the multi-connection mode to support the multi-connection function of the wireless mouse.

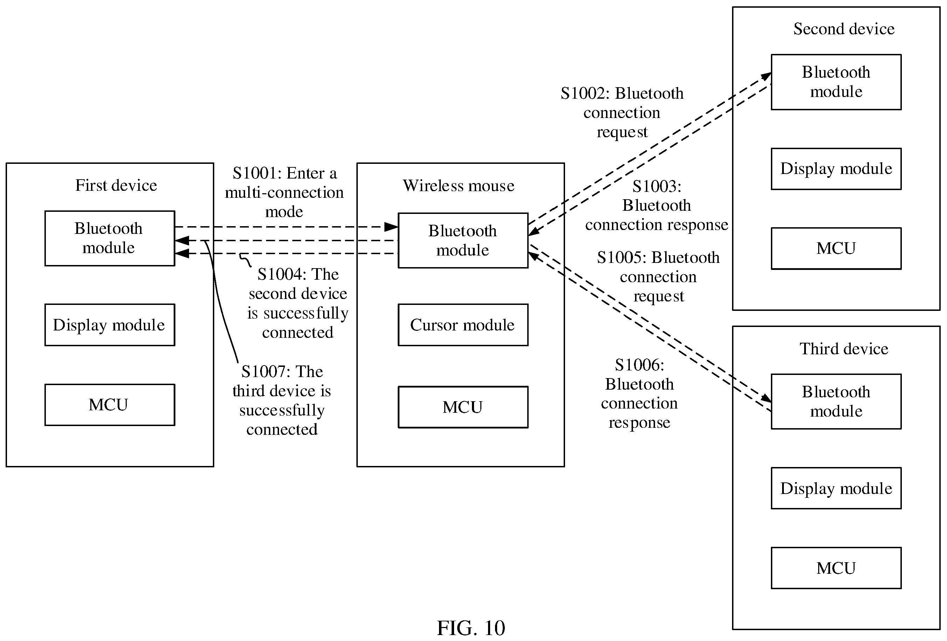

In a possible example, as shown in FIG. 10, the wireless mouse may establish wireless communication connections to the second device and the third device based on S1001 to S 1007 in a system architecture diagram shown in FIG. 10. Specific structures of the wireless mouse, the first device, the second device, and the third device shown in FIG. 10 are merely used as a simplified structure example. This is not specifically limited in embodiments of this application.

S904: The first device sends migration indication information to the wireless mouse when detecting that the mouse cursor tends to slide to another device.

The migration indication information indicates to perform focus migration of the wireless mouse.

In some embodiments, the migration indication information includes information about a position at which the mouse cursor slides out of the display of the first device.

Optionally, the migration indication information further includes a size of the display of the first device.

In another possible implementation, the information about the position at which the mouse cursor slides out of the display of the first device may be alternatively sent by the first device to the wireless mouse independently. This is not limited in this application.

Optionally, the first device may further independently send the size of the display of the first device to the wireless mouse.

In some embodiments, that the first device detects that the mouse cursor tends to slide to another device means that the first device detects that the mouse cursor slides out of the edge of the display of the first device, and a vector moving toward the another device exceeds a preset threshold. For example, the first device may monitor a position of the mouse cursor in real time. After the first device detects that the mouse cursor slides out of the edge of the display of the first device, the first device can still continuously receive a message sent by the wireless mouse, where movement coordinates of the mouse cursor moving toward the another device exceed the preset threshold. The another device is the target host.

In some embodiments, the migration indication information does not include related information of the target host. In this case, the wireless mouse determines the target host. A specific method for determining the target host by the wireless mouse is specifically described in the following description of S905.

In some embodiments, the migration indication information indicates the target host (for example, the second device), that is, the migration indication information indicates the focus of the wireless mouse to migrate to the second device. For example, the migration indication information may carry identification information of the second device.

In some embodiments, the first device may determine the target host (for example, the second device) based on the information about the position at which the mouse cursor slides out of the display of the first device and multi-device connection configuration information of the wireless mouse.

Optionally, in some embodiments, the first device may determine the target host (for example, the second device) based on the information about the position at which the mouse cursor slides out of the display of the first device, the size of the display of the first device, and the multi-device connection configuration information of the wireless mouse.

In this embodiment of this application, the multi-device connection configuration information of the wireless mouse may include a working mode of the wireless mouse, and position sorting among the first device, the second device, and the third device that are currently connected to the wireless mouse. The position sorting among the first device, the second device, and the third device is used by the wireless mouse to determine the target host during focus migration. For example, if the first device is on a left side of the second device, when the mouse cursor slides out of a right edge of the display of the first device, and a moving vector exceeds the preset threshold, the wireless mouse may determine that the second device is the target host.

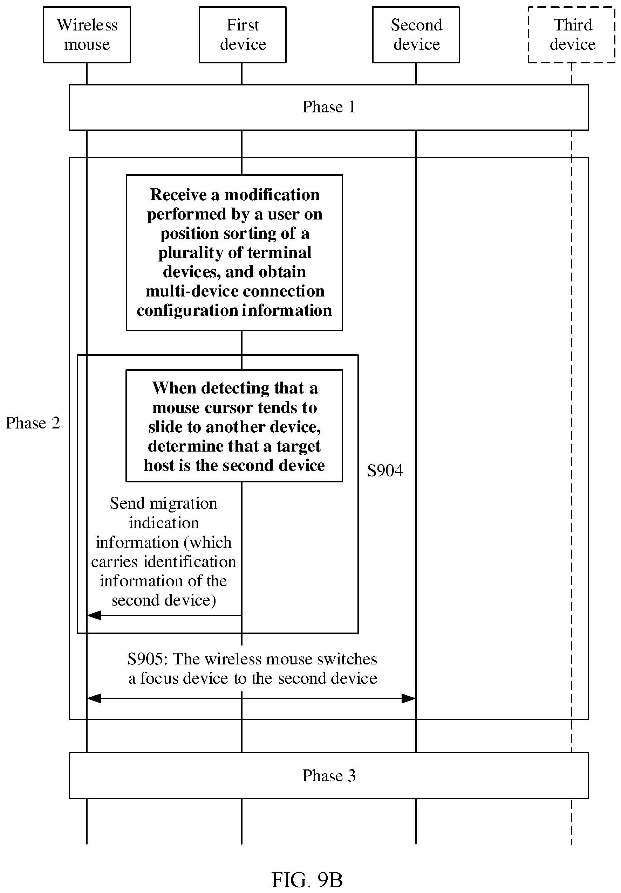

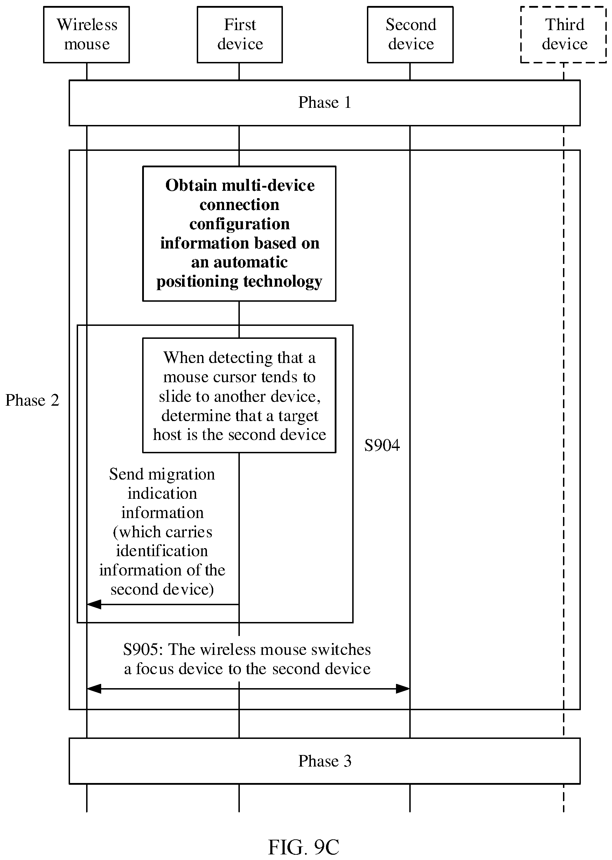

For example, the first device may determine the multi-device connection configuration information based on a manner 1 or a manner 2 (for details, refer to FIG. 9B and FIG. 9C, where a difference between FIG. 9B and FIG. 9C lies in that the first device determines the multi-device connection configuration information in different manners).

Manner 1: The first device determines the multi-device connection configuration information based on a modification performed by the user on the multi-device connection configuration.

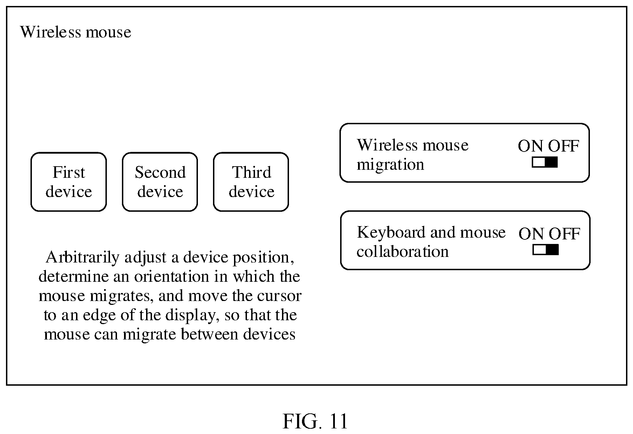

In a possible implementation, after the wireless mouse establishes the wireless communication connections to the second device and the third device, the first device may display a multi-device connection configuration interface shown in FIG. 11 used for the wireless mouse, so as to present current position sorting among the first device, the second device, and the third device to the user. In some embodiments, the interface shown in FIG. 11 may support the user in modifying the multi-device connection configuration.

As shown in FIG. 9B, the first device may receive a modification performed by the user on position sorting among a plurality of terminal devices (including the first device, the second device, and the third device), and obtain the multi-device connection configuration information of the wireless mouse (which is referred to as multi-device connection configuration information for short). The multi-device connection configuration information includes modified position sorting among the first device, the second device, and the third device. FIG. 9B is merely an example of an occasion at which the first device receives a multi-connection related configuration set by the user. A specific occasion at which the first device receives the multi-connection related configuration set by the user is not limited in this application.

Further, as shown in FIG. 9B, S904 may specifically include: When detecting that the mouse cursor tends to slide to another device, the first device determines that the target host is the second device. Further, the first device sends the migration indication information to the wireless mouse. The migration indication information carries the identification information of the second device. Specifically, when detecting that the mouse cursor tends to slide to another device, the first device may determine, based on the multi-device connection configuration information, that the target host is the second device.

The migration indication information shown in FIG. 9B is used to indicate the wireless mouse to switch the focus device to the second device.

In this embodiment of this application, the modification performed by the user on the multi-device connection configuration may include but is not limited to: modifying position sorting between terminal devices, disabling a terminal device, deleting a terminal device, enabling a terminal device, adding a terminal device, and the like. This is not limited in this application. Disabling a terminal device means that the input device is not supported in performing focus migration to the terminal device. However, disabling a terminal device does not disconnect a wireless connection between the input device and the terminal device. Deleting a terminal device means disconnecting a wireless connection between the input device and a terminal device. In some embodiments, if a terminal device is deleted, an icon of the terminal device may be further deleted from the UI interface. Enabling a terminal device means resuming support for focus migration to the terminal device. For example, the enabled terminal device may be a terminal device that is disabled previously. Adding a terminal device means establishing a wireless connection to a terminal device. In some embodiments, if a terminal device is added, an icon of the terminal device may be further added to the UI interface. For example, the added terminal device may be a terminal device that is deleted previously.

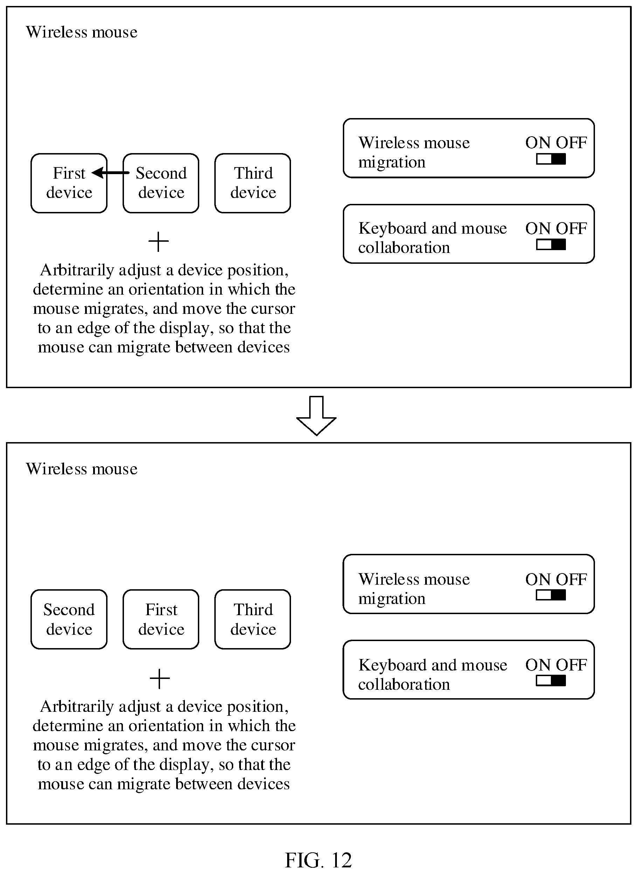

For example, as shown in FIG. 12, if the UI interface for the multi-device connection configuration of the wireless mouse displays an icon of the first device and an icon of the second device located on a right side of the first device, when the first device receives an operation of dragging the icon of the second device to the left by the user, the first device changes position sorting between the icon of the first device and the icon of the second device, that is, the first device modifies position sorting between the first device and the second device from the second device being located on the right side of the first device to the second device being located on the left side of the first device.

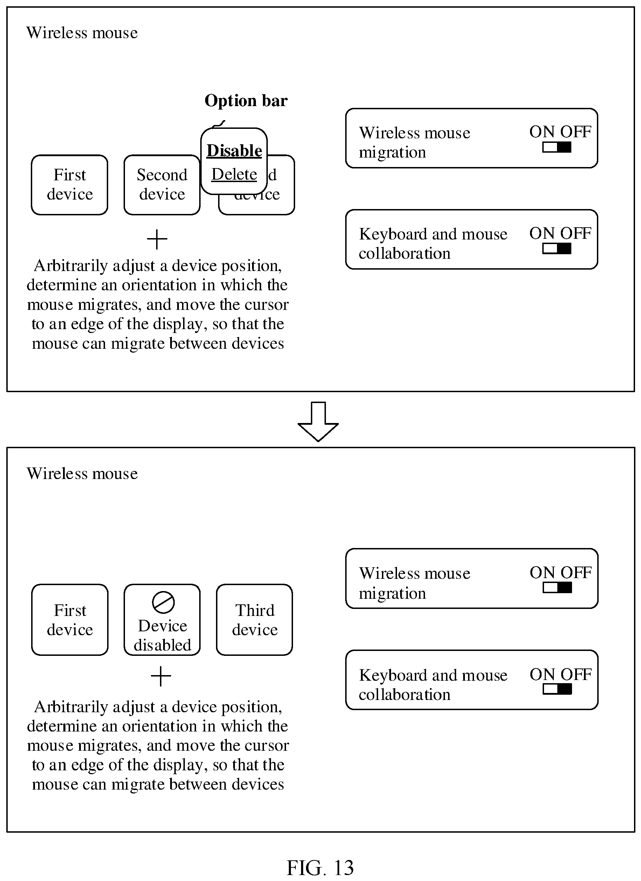

For another example, as shown in FIG. 13, when the first device receives an operation of choosing, by the user in an option bar shown in FIG. 13, to disable the second device, the first device disconnects a wireless connection between the input device and the second device.

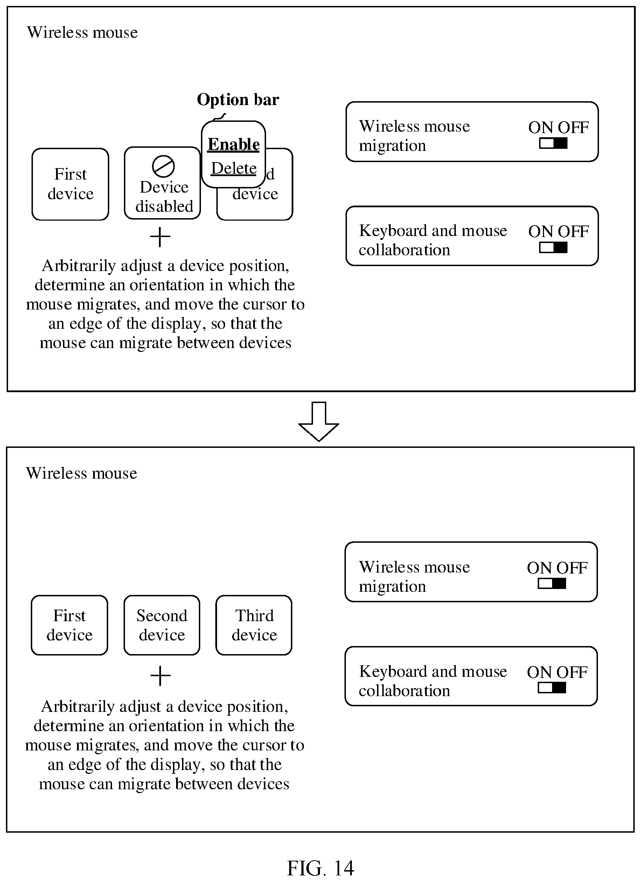

For another example, as shown in FIG. 14, when the first device receives an operation of choosing, by the user in the option bar shown in FIG. 14, to enable the second device, the wireless mouse re-establishes a wireless connection to the second device.

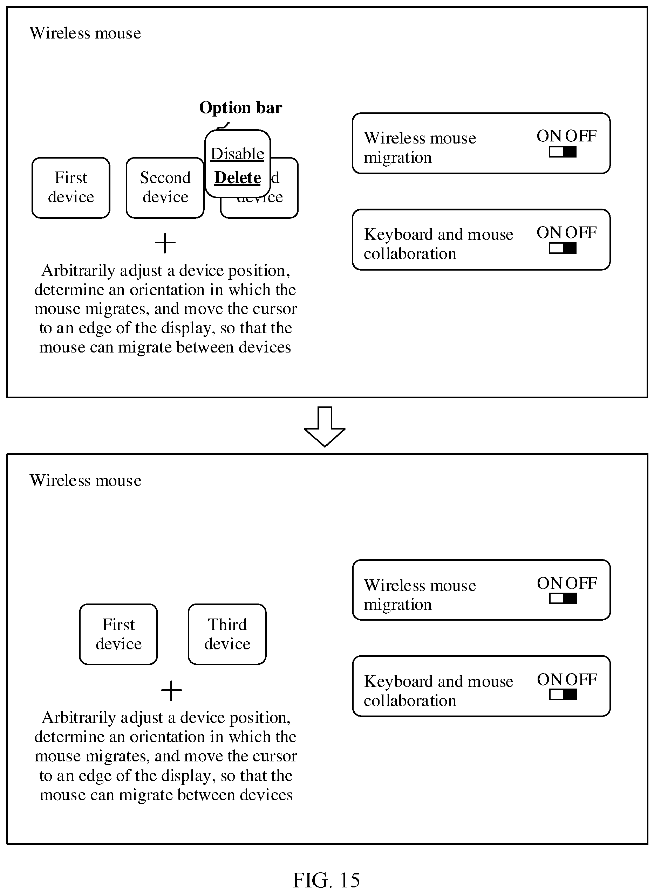

For another example, as shown in FIG. 15, when the first device receives an operation of choosing, by the user in the option bar shown in FIG. 15, to delete the second device, the wireless mouse deletes the icon of the second device from the UI interface for multi-device connection configuration.

For example, the option bar shown in FIG. 13, FIG. 14, and FIG. 15 may be displayed by the first device after the first device receives a preset operation (for example, touching and holding, double-clicking, clicking, or right-clicking) performed by the user on the icon of the second device.

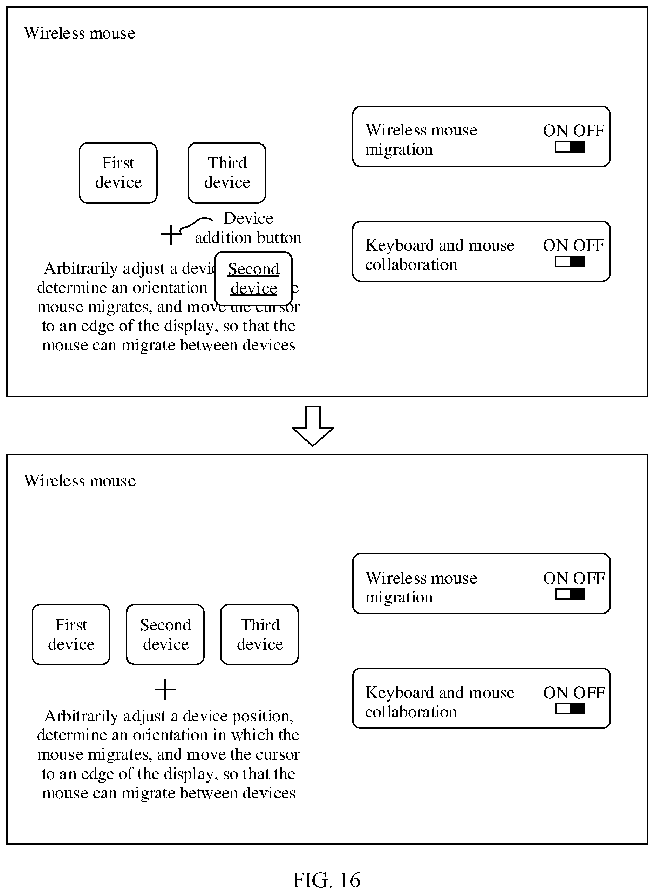

For another example, as shown in FIG. 16, when the first device receives an operation of selecting the second device by the user in the option bar shown in FIG. 16, the wireless mouse adds the icon of the second device to the UI interface for multi-device connection configuration. For example, the option bar shown in FIG. 16 may be displayed by the first device after the first device receives a selection operation (for example, touching and holding, double-clicking, or clicking) performed by the user on a device addition button on the interface shown in FIG. 16.

Manner 2: The first device determines the multi-device connection configuration information of the wireless mouse based on a preset principle, a basis, a method, or the like.

In a possible implementation, the first device or the wireless mouse may obtain, based on an automatic positioning technology (for example, an ultrasonic positioning technology), the multi-device connection configuration information of the wireless mouse, for example, specific positions of the first device, the second device, and the third device that are currently connected to the wireless mouse in an environment, and then determine position sorting among the first device, the second device, and the third device based on the specific positions.

As shown in FIG. 9C, the first device may obtain the multi-device connection configuration information of the wireless mouse (which is referred to as multi-device connection configuration information for short) based on the automatic positioning technology (for example, the ultrasonic positioning technology).

For example, the first device may transmit an ultrasonic signal through a loudspeaker disposed in the first device, and receive an echo signal of an ultrasonic signal from a terminal device (for example, a second terminal and a third terminal) through a microphone disposed in the first device. Further, the first device determines, based on a triangular positioning technology, specific positions of a plurality of terminal devices (for example, the first device, the second device, and the third device) in an environment based on a transmission path for sending a signal, a transmission path for receiving a signal, and a relative position relationship between the speaker and the microphone, so as to determine position sorting among the plurality of terminal devices (for example, the first device, the second device, and the third device).

For a specific description of the automatic positioning technology (for example, the ultrasonic positioning technology), refer to descriptions in a conventional technology. Details are not described in this embodiment of this application.

Further, as shown in FIG. 9C, S904 may specifically include: When detecting that the mouse cursor tends to slide to another device, the first device determines that the target host is the second device. Further, the first device sends the migration indication information to the wireless mouse. The migration indication information carries the identification information of the second device. Specifically, when detecting that the mouse cursor tends to slide to another device, the first device may determine, based on the multi-device connection configuration information of the wireless mouse, that the target host is the second device.

The migration indication information shown in FIG. 9C is used to indicate the wireless mouse to switch the focus device to the second device.

S905: The wireless mouse switches the focus device to the second device.

In some embodiments, if the migration indication information indicates the wireless mouse to migrate to the second device, for example, if the migration indication information carries the identification information of the second device, S905 may specifically include: The wireless mouse switches the focus device to the second device based on the identification information of the second device that is carried in the migration indication information.

In some other embodiments, if the migration indication information does not indicate the target host of the wireless mouse, S905 may specifically include: The wireless mouse determines the target host (for example, the second device) based on the information about the position at which the mouse cursor slides out of the display of the first device and the multi-device connection configuration information of the wireless mouse. The information about the position at which the mouse cursor slides out of the display of the first device is from the migration indication information.

For example, the wireless mouse may obtain the multi-device connection configuration information of the wireless mouse based on a manner A or a manner B.

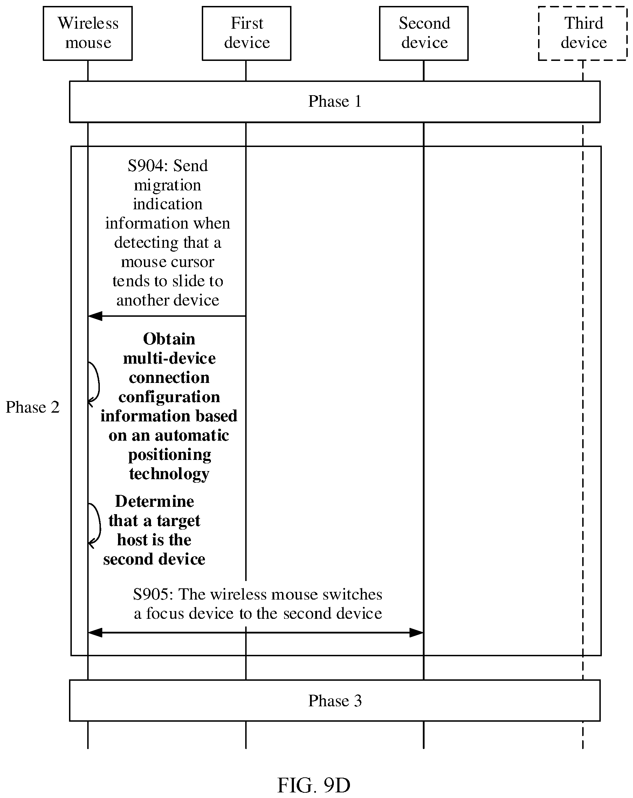

Manner A: The wireless mouse determines the multi-device connection configuration information of the wireless mouse based on a preset principle, a basis, a method, or the like (for details, refer to FIG. 9D).

In a possible implementation, as shown in FIG. 9D, the wireless mouse may obtain the multi-device connection configuration information of the wireless mouse based on the automatic positioning technology (for example, the ultrasonic positioning technology).

For example, the wireless mouse may transmit an ultrasonic signal by using a first component disposed in the wireless mouse, receive an echo signal of an ultrasonic signal from a terminal device (for example, a first terminal, a second terminal, and a third terminal) by using a second component disposed in the wireless mouse, and determine specific positions of a plurality of terminal devices (for example, the first device, the second device, and the third device) in an environment based on a transmission path for sending a signal, a transmission path for receiving a signal, and a relative position relationship between the first component and the second component, so as to determine the multi-device connection configuration information of the wireless mouse, for example, position sorting among the plurality of terminal devices (for example, the first device, the second device, and the third device).

As shown in FIG. 9D, after receiving the migration indication information from the first device, the wireless mouse may determine the target host (for example, the second device). For example, after receiving the migration indication information from the first device, the wireless mouse may determine, based on the information about the position at which the mouse cursor slides out of the display of the first device and the multi-device connection configuration information of the wireless mouse, that the target host is the second device.

Further, as shown in FIG. 9D, the wireless mouse may perform S905 based on the determined target host, to switch the focus device to the second device.

Manner B: The wireless mouse obtains the multi-device connection configuration information of the wireless mouse from the first device.

The multi-device connection configuration information of the wireless mouse that is obtained by the wireless mouse from the first device may be determined by the first device based on the foregoing manner 1 and the modification of the multi-device connection configuration by the user, or may be determined by the first device based on the foregoing manner 2 and a preset principle, a basis, or a method (for example, the ultrasonic positioning technology). This is not limited in this application.

For example, the multi-device connection configuration information of the wireless mouse may be sent by the first device to the wireless mouse before the wireless mouse switches the focus device from the first device to another terminal device.

Further, in some embodiments, to implement an effect of seamless continuation of the mouse cursor across devices, the first device may further synchronize, to the second device by using the wireless mouse, the information about the position at which the mouse cursor slides out of the display of the first device, as shown in S906 below. In an example, the wireless mouse may obtain, from the migration indication information that is from the first device, the information about the position at which the mouse cursor slides out of the display of the first device.

Optionally, the first device may further synchronize the size of the display of the first device to the second device by using the wireless mouse. For example, the first device may carry the size of the display of the first device by using the migration indication information, or separately send the size of the display of the first device to the wireless mouse.

S906: The wireless mouse sends, to the second device, the information about the position at which the mouse cursor slides out of the display of the first device.

The wireless mouse sends, to the second device, the information about the position at which the mouse cursor slides out of the display of the first device, so that the second device can determine an initial position of the mouse cursor on the display of the second device based on the position information, to continue the first device to display the mouse cursor, thereby implementing an effect of seamless continuation of the mouse cursor across devices.

S907: The second device displays the mouse cursor based on the information about a position at which the mouse cursor slides out of the display of the first device and the size of the display of the second device.

In an example, the second device may determine the initial position of the mouse cursor on the display of the second device based on the information about the position at which the mouse cursor sliding out of the display of the first device and the size of the display of the second device, and display the mouse cursor at the initial position.

In an example, when determining the initial position of the mouse cursor on the display of the second device, the second device may consider a time (for example, a preset time or an actual measurement time) spent in communication between devices, to compensate for a display lag.

S908: The wireless mouse receives the first operation of the user, and sends the movement information of the mouse cursor to the second device.

The first operation is, for example, an operation of moving the wireless mouse.

It may be understood that, based on the input device connection method provided in this embodiment of this application, an input device may randomly perform focus migration between a plurality of terminal devices. In this method, operation steps of simultaneously using the plurality of terminal devices can be simplified. In addition, according to the method provided in this embodiment of this application, an input device may simultaneously maintain communication connections to a plurality of terminal devices, and exchange information with a non-focus device in a background based on a communication connection between the input device and the non-focus device, to implement seamless focus migration between the plurality of terminal devices, ensure that no interface display freezing occurs during switching, and implement an effect of seamless continuation of the input device across devices. In addition, according to this method, information synchronization does not need to rely on a WLAN, that is, the plurality of terminal devices do not need to connect to a same WLAN.

In some embodiments, the wireless device (for example, the first input device) in this embodiment of this application further has a function of collaborative migration with another wireless device (for example, the second input device). For example, when the second input device switches the focus device from the first device to the second device, the first input device may synchronously switch the focus device from the first device to the second device. For another example, the second input device may alternatively switch the focus device from the first device to the second device after the first input device switches the focus device from the first device to the second device. According to the method, synchronous cross-device seamless focus migration between the first input device and the second input device can be implemented.

In a possible implementation, when the first input device switches the focus device to the second device, the first device may send a synchronous focus device switching instruction to the second input device that establishes a wireless connection to the source host, where the synchronous focus device switching instruction carries information about a target host (for example, the second device), to instruct the second input device to synchronously switch the focus device to the second device.

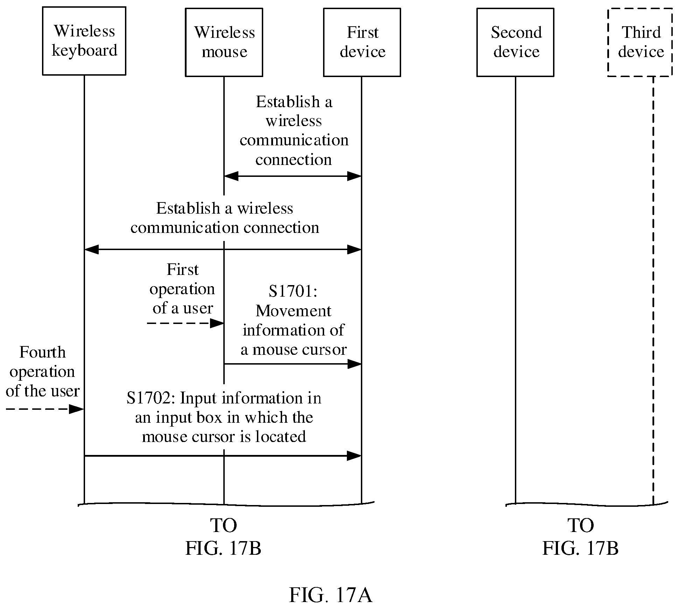

The following uses an example shown in FIG. 17A to FIG. 17C to show a specific process of keyboard and mouse collaborative migration. In the flowchart shown in FIG. 17A to FIG. 17C, the wireless keyboard (that is, the second input device) may collaborate with the wireless mouse (that is, the first input device) to switch the focus device from the first device to the second device. Both the wireless keyboard (that is, the second input device) and the wireless mouse (that is, the first input device) are initially in a normal mode, and both establish a wireless communication connection to the first device.

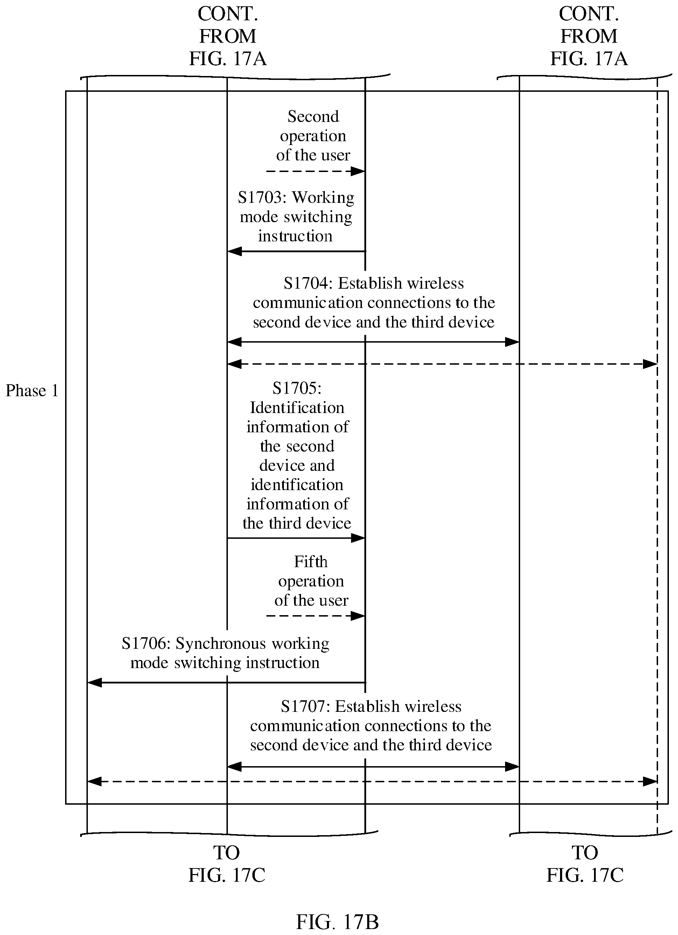

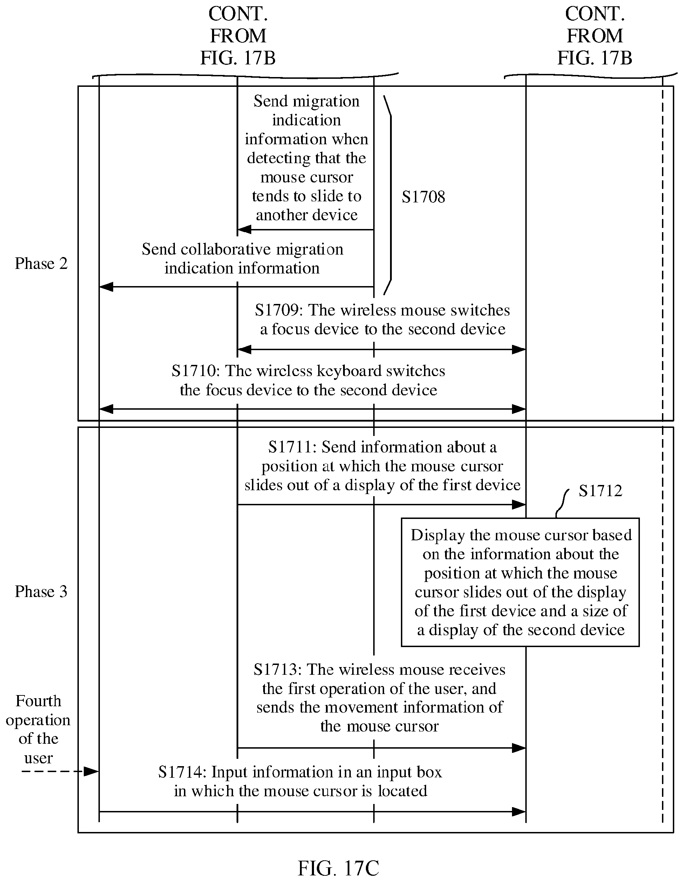

FIG. 17A to FIG. 17C are a flowchart of an input device connection method according to an embodiment of this application. Initially, the wireless mouse and the wireless keyboard are in the normal mode. As shown in S1701 in FIG. 17, the wireless mouse receives a first operation of a user, and sends movement information of a mouse cursor to the first device. The first operation is, for example, an operation of moving the wireless mouse. As shown in S1702 in FIG. 17, the wireless keyboard receives a fourth operation of the user, and inputs information into an input box in which the mouse cursor is located. The fourth operation is an operation of inputting information into the input box in which the mouse cursor is located.

Then, after the user enables a multi-device connection function of the wireless mouse, the wireless mouse enters the multi-connection mode from the normal mode. As shown in FIG. 17A to FIG. 17C, the phase 1 may include S1703 to S1707, the phase 2 may include S1708 to S1710, and the phase 3 may include S1711 to S1714. S1703 to S1714 are specifically as follows:
S1703: The first device sends a working mode switching instruction to the wireless mouse when receiving a second operation performed by the user on the UI interface.

The UI interface is, for example, a UI interface used to manage a multi-connection mode related configuration or operation. The second operation is, for example, an operation of enabling the multi-device connection function of the wireless mouse. The working mode switching instruction instructs the wireless mouse to switch to the multi-connection mode, for example, switch from the common mode to the multi-connection mode.

S1704: The wireless mouse establishes wireless communication connections to the second device and the third device.

After the wireless mouse receives the working mode switching instruction from the first device, the wireless mouse enters the multi-connection mode, and establishes wireless communication connections to the second device and the third device. After the wireless mouse enters the multi-connection mode and establishes the wireless communication connections to the second device and the third device, the first device is a focus device of the wireless mouse, and the second device and the third device are non-focus devices of the wireless mouse. In other words, the wireless mouse may directly control the first device currently.

S1705: The first device obtains identification information of the second device and identification information of the third device from the wireless mouse.

For example, after establishing the wireless communication connections to the second device and the third device, the wireless mouse may store the identification information of the second device and the identification information of the third device (for example, stored in a pairing information list). Further, after the wireless mouse establishes the wireless communication connections to the second device and the third device, the wireless mouse may share the identification information of the second device and the identification information of the third device with the first device.

For example, the identification information of the second device is, for example, the last four bits of a MAC address of the second device, and the identification information of the third device is, for example, the last four bits of a MAC address of the third device.

S1706. When receiving a fifth operation of the user, the first device sends a synchronous working mode switching instruction to the wireless keyboard.

The fifth operation is an operation of enabling a keyboard and mouse collaboration function. The synchronous working mode switching instruction instructs the wireless keyboard to switch to the multi-connection mode, for example, switch from the common mode to the multi-connection mode.

In an example, the synchronous working mode switching instruction may carry the identification information of the second device and the identification information of the third device, so that the wireless keyboard establishes wireless communication connections to the second device and the third device based on the identification information.

In an example, the first device may provide an option used by the user to select the keyboard and mouse collaboration function, so that the user performs setting based on an actual requirement. For example, an operation of enabling the keyboard and mouse collaboration function by the user is an operation of enabling a keyboard and mouse collaboration switch (402 shown in FIG. 4) on the wireless mouse by the user.

S1707: The wireless keyboard establishes wireless communication connections to the second device and the third device.

After the wireless keyboard receives the synchronous working mode switching instruction from the first device, the wireless keyboard enters the multi-connection mode, and establishes the wireless communication connections to the second device and the third device. After the wireless keyboard enters the multi-connection mode and establishes the wireless communication connections to the second device and the third device, the first device is a focus device of the wireless keyboard, and the second device and the third device are non-focus devices of the wireless keyboard. In other words, the wireless keyboard may directly input information to the first device currently.

In a possible implementation, the wireless keyboard may establish the wireless communication connection to the second device through a third MAC address and perform subsequent communication, and establish the wireless communication connection to the third device through a fourth MAC address and perform subsequent communication.

In an example, the wireless keyboard may determine, by comparing information about the paired terminal device in the Bluetooth channel with the identification information carried in the synchronous working mode switching instruction, whether the wireless keyboard has been paired with the second device and the third device. For example, if the wireless keyboard has not been paired with the second device or the third device, the wireless keyboard may initiate a pairing request based on the identification information carried in the synchronous working mode switching instruction.

In an example, for a process in which the wireless keyboard establishes the wireless communication connections to the second device and the third device, refer to a process in which the wireless mouse establishes the wireless communication connections to the second device and the third device shown in FIG. 10.

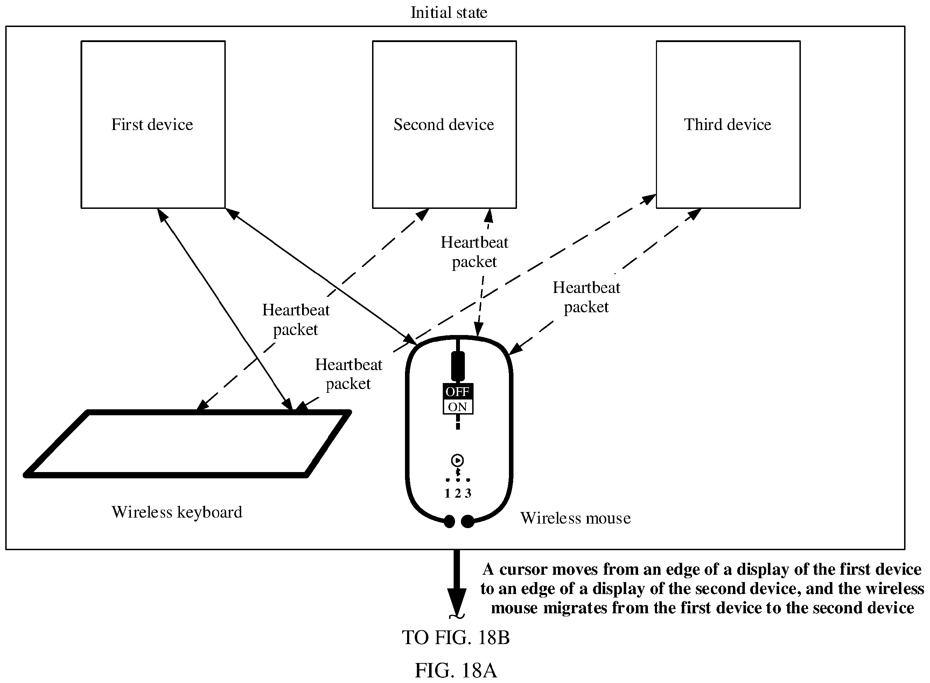

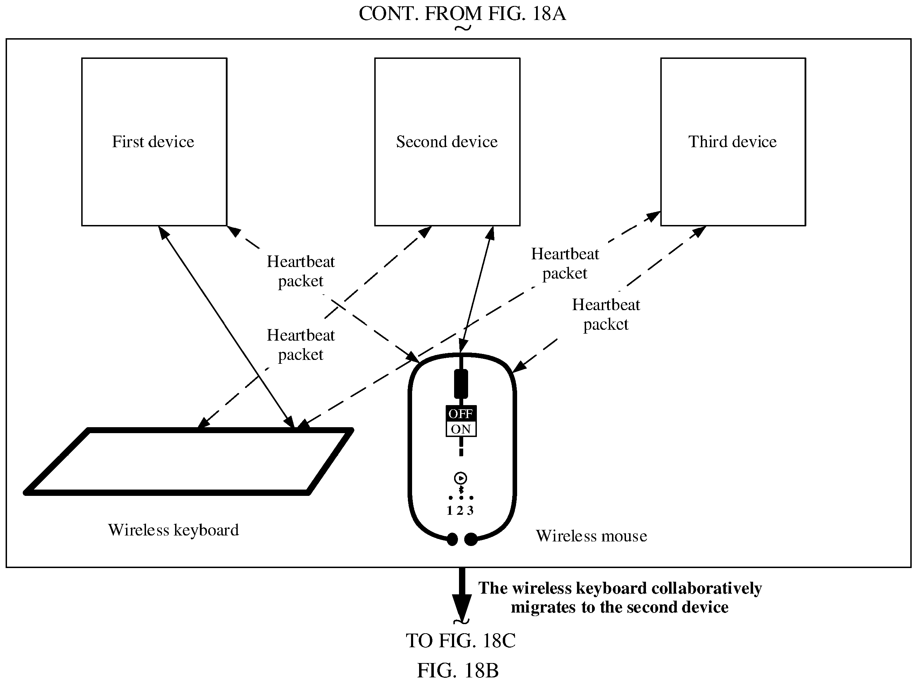

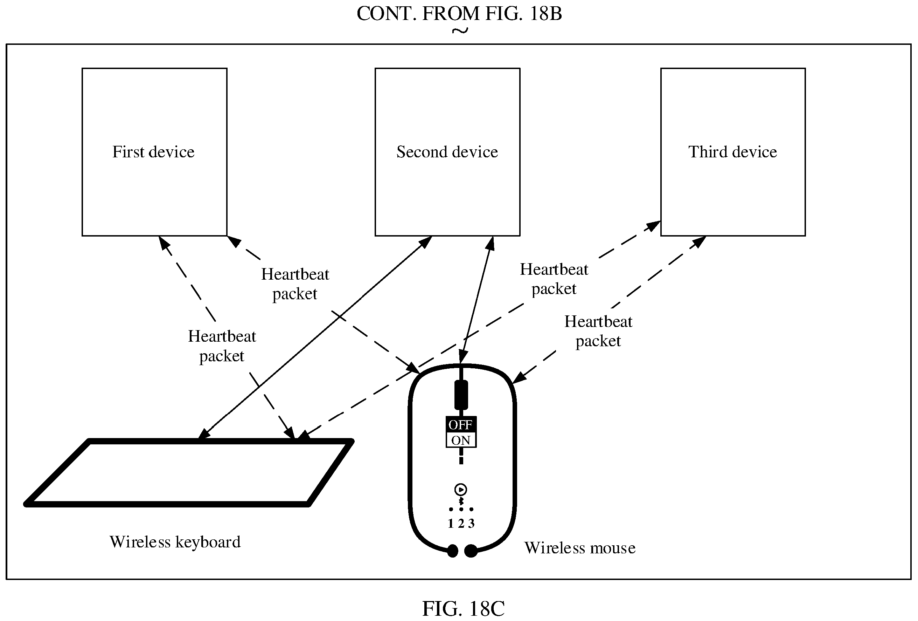

In an example, as shown in FIG. 18A to FIG. 18C, when the wireless mouse is in an initial state, that is, after the wireless mouse enters the multi-connection mode, a communication connection may be maintained between the wireless mouse and a non-focus device (for example, the second device and the third device) in a background. In addition, after the wireless keyboard enters the multi-connection mode, a communication connection between the wireless keyboard and the non-focus device (for example, the second device and the third device) may be maintained in a background. A manner of maintaining a communication connection in the background is shown in a manner of sending a heartbeat packet in FIG. 18A to FIG. 18C.

S1708: When detecting that the mouse cursor tends to slide to another device, the first device sends migration indication information to the wireless mouse, and sends collaborative migration indication information to the wireless keyboard.

The migration indication information indicates to perform focus migration of the wireless mouse.

In some embodiments, the migration indication information includes information about a position at which the mouse cursor slides out of the display of the first device.

In another possible implementation, the information about the position at which the mouse cursor slides out of the display of the first device may be alternatively sent by the first device to the wireless mouse independently. This is not limited in this application. In some embodiments, the migration indication information indicates the target host (for example, the second device), that is, the migration indication information indicates the focus of the wireless mouse to switch the focus device to the second device. For example, the migration indication information may carry identification information of the second device.

In some embodiments, the first device may determine the target host (for example, the second device) based on the information about the position at which the mouse cursor slides out of the display of the first device and multi-device connection configuration information of the wireless mouse. For example, the first device may determine the multi-device connection configuration information based on the foregoing manner 1 or manner 2.

S1709: The wireless mouse switches the focus device to the second device.

In some embodiments, if the migration indication information indicates the wireless mouse to switch the focus device to the second device, for example, if the migration indication information carries the identification information of the second device, S1709 may specifically include: The wireless mouse switches the focus device to the second device based on the identification information of the second device that is carried in the migration indication information.

In some other embodiments, if the migration indication information does not indicate the target host of the wireless mouse, S1709 may specifically include: The wireless mouse determines the target host (for example, the second device) based on the information about the position at which the mouse cursor slides out of the display of the first device and the multi-device connection configuration information of the wireless mouse. In an example, the information about the position at which the mouse cursor slides out of the display of the first device is from the migration indication information. For example, the wireless mouse may obtain the multi-device connection configuration information of the wireless mouse based on the foregoing manner A or manner B.

S1710: The wireless keyboard switches the focus device to the second device.

As shown in FIG. 18A to FIG. 18C, after the wireless mouse and the wireless keyboard switch the focus device to the second device, the wireless mouse and the wireless keyboard may maintain a communication connection to the non-focus device (for example, the first device and the third device) in the background. A manner of maintaining a communication connection in the background is shown in a manner of sending a heartbeat packet in FIG. 18A to FIG. 18C.

Further, in some embodiments, to keep synchronization of multi-device connection configuration information of the wireless mouse between the target host and the source host, the first device may further synchronize the multi-device connection configuration information of the wireless mouse to the second device by using the wireless mouse, for continued input from the input device to the second device, as shown in the following S1711 to S1714.

S1711: The wireless mouse sends, to the second device, the information about the position at which the mouse cursor slides out of the display of the first device.

S1712: The second device displays the mouse cursor based on the information about a position at which the mouse cursor slides out of the display of the first device and the size of the display of the second device.

S1713: The wireless mouse receives the first operation of the user, and sends the movement information of the mouse cursor to the second device.

The first operation is, for example, an operation of moving the wireless mouse.

S1714: The wireless keyboard receives the fourth operation of the user, and inputs information into the input box in which the mouse cursor is located.

The fourth operation is an operation of inputting information into the input box in which the mouse cursor is located.

For specific processes of steps S1701, S1704, S1707, S1708, S1709, S1711, S1712, and S1713 shown in FIG. 17A to FIG. 17C, refer to the descriptions of S901, S903, S904, S905, S906, S907, and S908 in the foregoing embodiment. Details are not described herein again.

It may be understood that, based on the input device connection method provided in this embodiment of this application, a plurality of input devices may perform collaborative migration. For example, when the first input device switches the focus device from the first device to the second device, the second input device synchronously switches the focus device from the first device to the second device. This method can greatly simplify an operation step of simultaneously using a plurality of terminal devices by the user, to implement seamless and synchronous migration of a plurality of input devices between the plurality of terminal devices, ensure that no interface display freezing occurs during switching, and implement an effect of seamless continuation of the plurality of input devices across devices. In addition, according to this method, information synchronization does not need to rely on a WLAN, that is, the plurality of terminal devices do not need to connect to a same WLAN.

Further, to ensure that the second device can synchronize a related personalized configuration parameter like a cursor display parameter of the first device after the input device switches the focus device from the first device to the second device, so as to implement seamless migration. In some embodiments, the input device (for example, the wireless mouse and/or the wireless keyboard) may further send the personalized configuration parameter of the input device to the second device. The personalized configuration parameter of the input device may include but is not limited to one or more of the following: dots per inch (dot per inch, DPI), a key definition (for example, shortcut key settings and a main key definition), and fingerprint information.

In some embodiments, the personalized configuration parameter of the input device may be sent by the first device to the input device before the input device switches the focus device from the first device to another terminal device. In an example, the first device may send the personalized configuration parameter of the input device to the input device based on setting performed by the user on a setting interface (an interface shown in FIG. 7) of the input device. For example, the input device may store, in corresponding Bluetooth channels, personalized configuration parameters set by the user on different terminal devices.

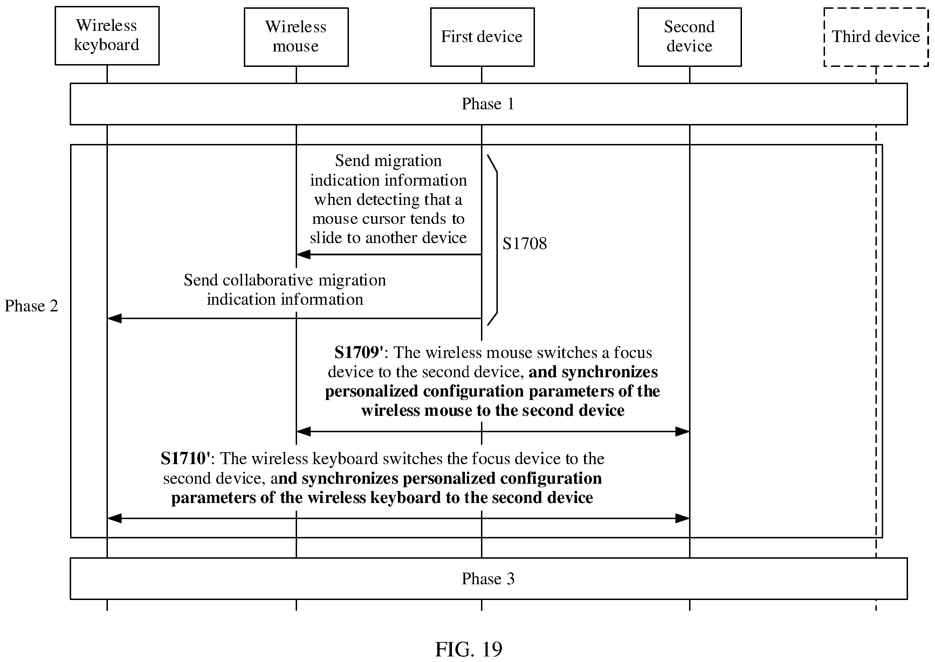

A keyboard and mouse collaboration scenario is used as an example. In an example, as shown in S1709' and S1710' in FIG. 19, the wireless mouse and the wireless keyboard may synchronize respective personalized configuration parameters to the target host (for example, the second device) when switching the focus device to the target host (for example, the second device). A difference between the input device connection method shown in FIG. 19 and the input device connection method shown in FIG. 18A to FIG. 18C lies in whether the wireless mouse and the wireless keyboard synchronize respective personalized configuration parameters when switching the focus device to the second device.

It may be understood that, the personalized configuration parameter of the input device is synchronized between the terminal devices, so that a consistent effect of personalized display effects (such as a size of a cursor, a shape of the cursor, a color of the cursor, DPI, and a display effect corresponding to a key) of the input device before and after the focus device is switched can be implemented, thereby providing the user with smoother input device migration experience.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be understood that, to implement functions in any one of the foregoing embodiments, the input device (including the first input device and the second input device) includes a corresponding hardware structure and/or a corresponding software module for performing each function. A person skilled in the art should easily be aware that, in combination with units and algorithm steps of the examples described in embodiments disclosed in this specification, this application may be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of the input device (including the first input device and the second input device) may be obtained through division. For example, the functional modules may be obtained through division corresponding to various functions, or two or more functions may be integrated into one processing module. The integrated module may be implemented in a form of hardware, or may be implemented in a form of a software function module. It should be noted that, in embodiments of this application, module division is an example, and is merely logical function division. In an actual implementation, another division manner may be used.

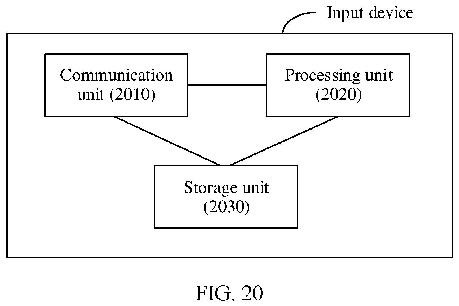

For example, when each functional module is obtained through division in an integrated manner, FIG. 20 is a block diagram of a structure of an input device according to an embodiment of this application. As shown in FIG. 20, the input device may include a communication unit 2010, a processing unit 2020, and a storage unit 2030.

The communication unit 2010 is configured to support communication between the input device and a terminal device (for example, a first terminal device or a second terminal device), and/or another process related to embodiments of this application. The processing unit 2020 is configured to support the input device in performing working mode switching and focus device migration, and/or another process related to embodiments of this application. The storage unit 2030 is configured to store computer program instructions and related data that are related to embodiments of this application.

In an example, the communication unit 2010 may include a radio frequency circuit. Specifically, the input device may receive and send a radio signal through the radio frequency circuit. The radio frequency circuit usually includes but is not limited to an antenna, at least one amplifier, a transceiver, a coupler, a low noise amplifier, a duplexer, and the like. In addition, the radio frequency circuit may further communicate with another device through wireless communication. The wireless communication may use any communication standard or protocol, including but not limited to a global system for mobile communications, a general packet radio service, code division multiple access, wideband code division multiple access, long term evolution, an e-mail message, a short message service, and the like.

It should be understood that each module in the input device may be implemented in a form of software and/or hardware. This is not specifically limited herein. In other words, the input device is presented in a form of a functional module. The "module" herein may be an application-specific integrated circuit ASIC, a circuit, a processor that executes one or more software or firmware programs and a memory, an integrated logic circuit, and/or another component that can provide the foregoing functions.

In an optional manner, when software is used for implementing data transmission, the data transmission may be completely or partially implemented in a form of a computer program product. The computer program product includes one or more computer instructions. When the computer program instructions are loaded and executed on a computer, the procedures or functions according to embodiments of this application are completely or partially implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, a coaxial cable, an optical fiber, or a digital subscriber line (digital subscriber line, DSL)) or a wireless manner (for example, infrared, radio, and microwave, or the like). The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disk (digital video disk, DVD)), a semiconductor medium (for example, a solid state disk solid state disk (SSD)), or the like.

Method or algorithm steps described in combination with embodiments of this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM memory, or a storage medium in any other form well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an electronic device. Certainly, the processor and the storage medium may exist in the input device as discrete components.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented based on a requirement, that is, an inner structure of an apparatus is divided into different functional modules to implement all or some of the functions described above.

## Claims

1. An input device connection method, wherein the method is applied to a communication system (100), the communication system comprises a first input device (130), a first terminal device (110), and a second terminal device (120), and the method comprises:
when the first input device is in a multi-connection working mode, maintaining (S903), by the first input device, communication connections to both the first terminal device and the second terminal device;
sending (S904), by the first terminal device, migration indication information to the first input device, wherein the migration indication information indicates the first input device to perform focus device switching; and
switching (S905), by the first input device, a focus device from the first terminal device to the second terminal device in response to the migration indication information, wherein
before the first input device switches the focus device from the first terminal device to the second terminal device, the first input device is configured to input information to the first terminal device; and after the first input device switches the focus device from the first terminal device to the second terminal device, the first input device is configured to input information to the second terminal device,
wherein the first input device is a wireless mouse, and the method is **characterized by** the steps of:
sending, by the first terminal device to the first input device, information about a position at which a mouse cursor slides out of a display of the first terminal device; and
sending, by the first input device to the second terminal device, the information about the position at which the mouse cursor slides out of the display of the first terminal device, so that the second terminal device determines an initial position of the mouse cursor on a display of the second terminal device.

2. The method according to claim 1, wherein the sending, by the first terminal device, migration indication information to the first input device comprises:
sending, by the first terminal device, the migration indication information to the first input device when detecting that the mouse cursor tends to slide to another terminal device.

3. The method according to claim 1, wherein the sending, by the first terminal device, migration indication information to the first input device comprises:
sending, by the first terminal device, the migration indication information to the first input device when detecting that the mouse cursor tends to slide to another terminal device and determining that the another terminal device is the second terminal device, wherein
the migration indication information carries identification information of the second terminal device.

4. The method according to claim 3, wherein the method further comprises:
determining, by the first terminal device based on the information about the position at which the mouse cursor slides out of the display of the first terminal device and multi-device connection configuration information of the first input device, that the another terminal device is the second terminal device, wherein
the multi-device connection configuration information of the first input device represents position sorting among a plurality of terminal devices.

5. The method according to claim 4, wherein the method further comprises:
determining, by the first terminal device, the multi-device connection configuration information of the first input device based on position sorting among a plurality of terminal devices that is customized by a user on a user interface.

6. The method according to claim 4, wherein the method further comprises:
obtaining, by the first terminal device, the multi-device connection configuration information of the first input device based on an automatic positioning technology.

7. The method according to claim 1 or 2, wherein
the switching, by the first input device, the focus device from the first terminal device to the second terminal device in response to the migration indication information comprises:
switching, by the first input device, the focus device from the first terminal device to the second terminal device in response to the migration indication information based on the information about the position at which the mouse cursor slides out of the display of the first terminal device and multi-device connection configuration information of the first input device, wherein
the multi-device connection configuration information of the first input device represents position sorting among a plurality of terminal devices.

8. The method according to claim 7, wherein the method further comprises:
obtaining, by the first input device, the multi-device connection configuration information of the first input device based on an automatic positioning technology.

9. The method according to any one of claims 1 to 8, wherein after the switching, by the first input device, the focus device from the first terminal device to the second terminal device, the method further comprises:
sending, by the first input device, a personalized configuration parameter of the first input device to the second terminal device, wherein
the personalized configuration parameter comprises one or more of the following: dots per inch, shortcut key settings, a main key definition, and fingerprint information.

10. The method according to claim 5 or claim 9 when depending on claim 5, wherein the method further comprises:
after detecting an operation of enabling a multi-device connection function by the user on the user interface, sending, by the first terminal device, a working mode switching instruction to the first input device, to instruct the first input device to switch from a normal mode to the multi-connection mode; and
switching, by the first input device, from the normal mode to the multi-connection mode, wherein the first input device in the normal mode establishes a wireless communication connection to only the first terminal device or
after detecting an operation of turning on, by the user, a switch used to enable a multi-device connection function on the first input device, switching, by the first input device, from a normal mode to the multi-connection mode.

11. The method according to any one of claims 1 to 10, wherein the communication system further comprises a second input device, the second device is in a multi-connection working mode, and maintains communication connections to both the first terminal device and the second terminal device, and the method further comprises:
sending, by the first terminal device, collaborative migration indication information to the second input device; and
switching, by the second input device, the focus device from the first terminal device to the second terminal device in response to the collaborative migration indication information, wherein
before the second input device switches the focus device from the first terminal device to the second terminal device, the second input device is configured to input information to the first terminal device; and after the second input device switches the focus device from the first terminal device to the second terminal device, the second input device is configured to input information to the second terminal device.

12. The method according to claim 11, wherein the second input device is a wireless keyboard, and the sending, by the first terminal device, collaborative migration indication information to the second input device comprises:
after detecting an operation of enabling a keyboard and mouse collaboration function by the user, sending, by the first terminal device, the collaborative migration indication information to the first input device.

13. The method according to any one of claims 1 to 12, wherein
when the first input device is in the multi-connection working mode, the first input device maintains a communication connection to the first terminal device through a first multimedia access control MAC address and a communication connection to the second terminal device through a second MAC address.

14. A communication system, wherein the communication system comprises:
a first terminal device, a second terminal device, and a first input device, wherein the communication system is configured to implement the method according to any one of claims 1 to 13.

## Patentansprüche

1. Verfahren zum Anschluss von Eingabevorrichtungen, wobei das Verfahren auf ein Kommunikationssystem (100) angewendet wird, das Kommunikationssystem eine erste Eingabevorrichtung (130), eine erste Endgerätevorrichtung (110) und eine zweite Endgerätevorrichtung (120) umfasst, und das Verfahren Folgendes umfasst:
wenn sich die erste Eingabevorrichtung in einem Arbeitsmodus mit mehreren Anschlüssen befindet, Aufrechterhalten (S903) von Kommunikationsanschlüssen sowohl zu der ersten Endgerätevorrichtung als auch zu der zweiten Endgerätevorrichtung durch die erste Eingabevorrichtung;
Senden (S904) von Migrationsanzeigeinformationen durch die erste Endgerätevorrichtung an die erste Eingabevorrichtung, wobei die Migrationsanzeigeinformationen die erste Eingabevorrichtung anweisen, eine Umschaltung von Fokusvorrichtungen durchzuführen; und
Umschalten (S905) einer Fokusvorrichtung von der ersten Endgerätevorrichtung auf die zweite Endgerätevorrichtung durch die erste Eingabevorrichtung als Reaktion auf die Migrationsanzeigeinformationen, wobei
die erste Eingabevorrichtung, bevor die erste Eingabevorrichtung die Fokusvorrichtung von der ersten Endgerätevorrichtung auf die zweite Endgerätevorrichtung umschaltet, dazu konfiguriert ist, Informationen in die erste Endgerätevorrichtung einzugeben; und
die erste Eingabevorrichtung, nachdem die erste Eingabevorrichtung die Fokusvorrichtung von der ersten Endgerätevorrichtung auf die zweite Endgerätevorrichtung umgeschaltet hat, dazu konfiguriert ist, Informationen in die zweite Endgerätevorrichtung einzugeben,
wobei die erste Eingabevorrichtung eine drahtlose Maus ist, und das Verfahren durch die folgenden Schritte gekennzeichnet ist:
Senden von Informationen über eine Position, an welcher der Mauszeiger aus einem Display der ersten Endgerätevorrichtung herausgleitet, durch die erste Endgerätevorrichtung an die erste Eingabevorrichtung; und
Senden der Informationen über die Position, an welcher der Mauszeiger aus dem Display der ersten Endgerätevorrichtung herausgleitet, durch die erste Eingabevorrichtung an die zweite Endgerätevorrichtung, so dass die zweite Endgerätevorrichtung eine Anfangsposition des Mauszeigers auf einem Display der zweiten Endgerätevorrichtung bestimmt.

2. Verfahren nach Anspruch 1, wobei das Senden von Migrationsanzeigeinformationen durch die erste Endgerätevorrichtung an die erste Eingabevorrichtung Folgendes umfasst:
Senden der Migrationsanzeigeinformationen durch die erste Endgerätevorrichtung an die erste Eingabevorrichtung beim Detektieren, dass der Mauszeiger dazu neigt, zu einer anderen Endgerätevorrichtung zu gleiten.

3. Verfahren nach Anspruch 1, wobei das Senden von Migrationsanzeigeinformationen durch die erste Endgerätevorrichtung an die erste Eingabevorrichtung Folgendes umfasst:
Senden der Migrationsanzeigeinformationen durch die erste Endgerätevorrichtung an die erste Eingabevorrichtung beim Detektieren, dass der Mauszeiger dazu neigt, zu einer anderen Endgerätevorrichtung zu gleiten, und Bestimmen, dass die andere Endgerätevorrichtung die zweite Endgerätevorrichtung ist, wobei die Migrationsanzeigeinformationen Identifikationsinformationen der zweiten Endgerätevorrichtung enthalten.

4. Verfahren nach Anspruch 3, wobei das Verfahren ferner Folgendes umfasst:
Bestimmen durch die erste Endgerätevorrichtung basierend auf den Informationen über die Position, an welcher der Mauszeiger aus dem Display der ersten Endgerätevorrichtung herausgleitet, und
den Informationen zur Konfiguration von Anschlüssen mehrerer Vorrichtungen der ersten Eingabevorrichtung, dass die andere Endgerätevorrichtung die zweite Endgerätevorrichtung ist, wobei die Informationen zur Konfiguration von Anschlüssen mehrerer Vorrichtungen der ersten Eingabevorrichtung eine Positionssortierung unter einer Vielzahl von Endgerätevorrichtungen darstellen.

5. Verfahren nach Anspruch 4, wobei das Verfahren ferner Folgendes umfasst:
Bestimmen der Informationen zur Konfiguration von Anschlüssen mehrerer Vorrichtungen der ersten Eingabevorrichtung durch die erste Endgerätevorrichtung basierend auf einer Positionssortierung unter einer Vielzahl von Endgerätevorrichtungen, die durch einen Benutzer auf einer Benutzerschnittstelle angepasst wird.

6. Verfahren nach Anspruch 4, wobei das Verfahren ferner Folgendes umfasst:
Ermitteln der Informationen zur Konfiguration von Anschlüssen mehrerer Vorrichtungen der ersten Eingabevorrichtung durch die erste Endgerätevorrichtung basierend auf einer automatischen Positionierungstechnologie.

7. Verfahren nach Anspruch 1 oder 2, wobei das Umschalten der Fokusvorrichtung von der ersten Endgerätevorrichtung auf die zweite Endgerätevorrichtung durch die erste Eingabevorrichtung als Reaktion auf die Migrationsanzeigeinformationen Folgendes umfasst:
Umschalten der Fokusvorrichtung von der ersten Endgerätevorrichtung auf die zweite Endgerätevorrichtung durch die erste Eingabevorrichtung als Reaktion auf die Migrationsanzeigeinformationen basierend auf den Informationen über die Position, an welcher der Mauszeiger aus dem Display der ersten Endgerätevorrichtung herausgleitet, und den Informationen zur Konfiguration von Anschlüssen mehrerer Vorrichtungen der ersten Eingabevorrichtung, wobei
die Informationen zur Konfiguration von Anschlüssen mehrerer Vorrichtungen der ersten Eingabevorrichtung eine Positionssortierung unter einer Vielzahl von Endgerätevorrichtungen darstellen.

8. Verfahren nach Anspruch 7, wobei das Verfahren ferner Folgendes umfasst:
Ermitteln der Informationen zur Konfiguration von Anschlüssen mehrerer Vorrichtungen der ersten Eingabevorrichtung durch die erste Eingabevorrichtung basierend auf einer automatischen Positionierungstechnologie.

9. Verfahren nach einem der Ansprüche 1 bis 8, wobei das Verfahren nach dem Umschalten der Fokusvorrichtung von der ersten Endgerätevorrichtung auf die zweite Endgerätevorrichtung durch die erste Eingabevorrichtung ferner Folgendes umfasst:
Senden eines personalisierten Konfigurationsparameters der ersten Eingabevorrichtung durch die erste Eingabevorrichtung an die zweite Endgerätevorrichtung, wobei
der personalisierte Konfigurationsparameter einen oder mehrere der folgenden Parameter umfasst: Punkte je Zoll, Schnelltasteneinstellungen, eine Haupttastendefinition und Fingerabdruckinformationen.

10. Verfahren nach Anspruch 5 oder Anspruch 9 in Abhängigkeit von Anspruch 5, wobei das Verfahren ferner Folgendes umfasst:
nach dem Detektieren eines Vorgangs des Aktivierens einer Funktion zum Anschluss mehrerer Vorrichtungen durch den Benutzer auf der Benutzerschnittstelle, Senden einer Anweisung zum Umschalten des Arbeitsmodus durch die erste Endgerätevorrichtung an die erste Eingabevorrichtung, um die erste Eingabevorrichtung anzuweisen, von einem Normalmodus in den Modus zum Anschluss mehrerer Vorrichtungen umzuschalten; und
Umschalten durch die erste Eingabevorrichtung von dem Normalmodus in den Modus für mehrere Anschlüsse, wobei die erste Eingabevorrichtung in dem Normalmodus eine drahtlose Kommunikationsverbindung nur zu der ersten Endgerätevorrichtung herstellt, oder
nach dem Detektieren eines Vorgangs des Einschaltens eines Schalters durch den Benutzer, der verwendet wird, um eine Funktion zum Anschluss mehrerer Vorrichtungen an der ersten Eingabevorrichtung zu aktivieren, Umschalten durch die erste Eingabevorrichtung von einem Normalmodus auf den Modus für mehrere Anschlüsse.

11. Verfahren nach einem der Ansprüche 1 bis 10, wobei das Kommunikationssystem ferner eine zweite Eingabevorrichtung umfasst, sich die zweite Vorrichtung in einem Arbeitsmodus mit mehreren Anschlüssen befindet und Kommunikationsverbindungen sowohl zu der ersten Endgerätevorrichtung als auch zu der zweiten Endgerätevorrichtung aufrechterhält, und das Verfahren ferner Folgendes umfasst:
Senden von kollaborativen Migrationsanzeigeinformationen durch die erste Endgerätevorrichtung an die zweite Eingabevorrichtung; und
Umschalten der Fokusvorrichtung von der ersten Endgerätevorrichtung auf die zweite Endgerätevorrichtung durch die zweite Eingabevorrichtung als Reaktion auf die kollaborativen Migrationsanzeigeinformationen, wobei
die zweite Eingabevorrichtung, bevor die zweite Eingabevorrichtung die Fokusvorrichtung von der ersten Endgerätevorrichtung auf die zweite Endgerätevorrichtung umschaltet, dazu konfiguriert ist, Informationen in die erste Endgerätevorrichtung einzugeben; und die zweite Eingabevorrichtung, nachdem die zweite Eingabevorrichtung die Fokusvorrichtung von der ersten Endgerätevorrichtung auf die zweite Endgerätevorrichtung umgeschaltet hat, dazu konfiguriert ist, Informationen in die zweite Endgerätevorrichtung einzugeben.

12. Verfahren nach Anspruch 11, wobei die zweite Eingabevorrichtung eine drahtlose Tastatur ist und das Senden von kollaborativen Migrationsanzeigeinformationen durch die erste Endgerätevorrichtung an die zweite Eingabevorrichtung Folgendes umfasst:
nach dem Detektieren eines Vorgangs zum Aktivieren einer Tastatur- und Maus-Kollaborationsfunktion durch den Benutzer, Senden der kollaborativen Migrationsanzeigeinformationen durch die erste Endgerätevorrichtung an die erste Eingabevorrichtung.

13. Verfahren nach einem der Ansprüche 1 bis 12, wobei
wenn sich die erste Eingabevorrichtung in dem Arbeitsmodus für mehrere Anschlüsse befindet, die erste Eingabevorrichtung eine Kommunikationsverbindung über eine erste Adresse der Multimedia-Zugriffssteuerung, MAC-Adresse, mit der ersten Endgerätevorrichtung und eine Kommunikationsverbindung über eine zweite MAC-Adresse mit der zweiten Endgerätevorrichtung aufrechterhält.

14. Kommunikationssystem, wobei das Kommunikationssystem Folgendes umfasst:
eine erste Endgerätevorrichtung, eine zweite Endgerätevorrichtung und eine erste Eingabevorrichtung, wobei das Kommunikationsverfahren dazu konfiguriert ist, das Verfahren nach einem der Ansprüche 1 bis 13 zu implementieren.

## Revendications

1. Procédé de connexion de dispositif d'entrée, dans lequel le procédé est appliqué à un système de communication (100), le système de communication comprend un premier dispositif d'entrée (130), un premier dispositif terminal (110), et un second dispositif terminal (120), et le procédé comprend :
lorsque le premier dispositif d'entrée est en mode de fonctionnement multi-connexion, le maintient (S903), par le premier dispositif d'entrée, de connexions de communication à la fois au premier dispositif terminal et au second dispositif terminal ;
l'envoi (S904), par le premier dispositif terminal, d'informations d'indication de migration au premier dispositif d'entrée, dans lequel les informations d'indication de migration indiquent au premier dispositif d'entrée de réaliser une commutation de dispositif de mise au point ; et
la commutation (S905), par le premier dispositif d'entrée, d'un dispositif de mise au point du premier dispositif terminal vers le second dispositif terminal en réponse aux informations d'indication de migration, dans lequel
avant que le premier dispositif d'entrée ne commute le dispositif de mise au point du premier dispositif terminal vers le second dispositif terminal, le premier dispositif d'entrée est configuré pour entrer des informations au premier dispositif terminal ; et après que le premier dispositif d'entrée commute le dispositif de mise au point du premier dispositif terminal vers le second dispositif terminal, le premier dispositif d'entrée est configuré pour entrer des informations au second dispositif terminal,
dans lequel le premier dispositif d'entrée est une souris sans fil, et le procédé est **caractérisé par** les étapes suivantes :
l'envoi, par le premier dispositif terminal au premier dispositif d'entrée, d'informations sur une position à laquelle le curseur de la souris sort d'un écran du premier dispositif terminal ; et
l'envoi, par le premier dispositif d'entrée au second dispositif terminal, des informations sur la position à laquelle le curseur de la souris sort de l'écran du premier dispositif terminal, de sorte que le second dispositif terminal détermine une position initiale du curseur de la souris sur un écran du second dispositif terminal.

2. Procédé selon la revendication 1, dans lequel l'envoi, par le premier dispositif terminal, d'informations d'indication de migration au premier dispositif d'entrée comprend :
l'envoi, par le premier dispositif terminal, des informations d'indication de migration au premier dispositif d'entrée lors de la détection que le curseur de la souris tend à glisser vers un autre dispositif terminal.

3. Procédé selon la revendication 1, dans lequel l'envoi, par le premier dispositif terminal, d'informations d'indication de migration au premier dispositif d'entrée comprend :
l'envoi, par le premier dispositif terminal, des informations d'indication de migration au premier dispositif d'entrée lors de la détection que le curseur de la souris tend à glisser vers un autre dispositif terminal et de la détermination que l'autre dispositif terminal est le second dispositif terminal, dans lequel
les informations d'indication de migration contiennent des informations d'identification du second dispositif terminal.

4. Procédé selon la revendication 3, dans lequel le procédé comprend également :
la détermination, par le premier dispositif terminal sur la base des informations sur la position à laquelle le curseur de la souris sort de l'écran du premier dispositif terminal et des informations de configuration de connexion multi-dispositifs du premier dispositif d'entrée, que l'autre dispositif terminal est le second dispositif terminal, dans lequel
les informations de configuration de connexion multi-dispositifs du premier dispositif d'entrée représentent un tri de positions parmi une pluralité de dispositifs terminaux.

5. Procédé selon la revendication 4, dans lequel le procédé comprend également :
la détermination, par le premier dispositif terminal, des informations de configuration de connexion multi-dispositifs du premier dispositif d'entrée sur la base d'un tri de positions parmi une pluralité de dispositifs terminaux qui est personnalisé par un utilisateur sur une interface utilisateur.

6. Procédé selon la revendication 4, dans lequel le procédé comprend également :
l'obtention, par le premier dispositif terminal, des informations de configuration de connexion multi-dispositifs du premier dispositif d'entrée sur la base d'une technologie de positionnement automatique.

7. Procédé selon la revendication 1 ou 2, dans lequel la commutation, par le premier dispositif d'entrée, du dispositif de mise au point du premier dispositif terminal au second dispositif terminal en réponse aux informations d'indication de migration comprend :
la commutation, par le premier dispositif d'entrée, du dispositif de mise au point du premier dispositif terminal vers le second dispositif terminal en réponse aux informations d'indication de migration sur la base des informations sur la position à laquelle le curseur de la souris sort de l'écran du premier dispositif terminal et aux informations de configuration de connexion multi-dispositifs du premier dispositif d'entrée, dans lequel
les informations de configuration de connexion multi-dispositifs du premier dispositif d'entrée représentent un tri de positions parmi une pluralité de dispositifs terminaux.

8. Procédé selon la revendication 7, dans lequel le procédé comprend également :
l'obtention, par le premier dispositif terminal, des informations de configuration de connexion multi-dispositifs du premier dispositif terminal sur la base d'une technologie de positionnement automatique.

9. Procédé selon l'une quelconque des revendications 1 à 8, dans lequel après la commutation, par le premier dispositif d'entrée, du dispositif de mise au point du premier dispositif terminal vers le second dispositif terminal, le procédé comprend également :
l'envoi, par le premier dispositif d'entrée, d'un paramètre de configuration personnalisé du premier dispositif d'entrée au second dispositif terminal, dans lequel
le paramètre de configuration personnalisé comprend un ou plusieurs des éléments suivants : points par pouce, paramètres des touches de raccourci, définition d'une touche principale, et informations d'empreinte digitale.

10. Procédé selon la revendication 5 ou la revendication 9 lorsqu'elle dépend de la revendication 5, dans lequel le procédé comprend également :
après la détection d'une opération d'activation d'une fonction de connexion multi-dispositifs par l'utilisateur sur l'interface utilisateur, l'envoi, par le premier dispositif terminal, d'une instruction de commutation de mode de fonctionnement au premier dispositif d'entrée, pour ordonner au premier dispositif d'entrée de commuter du mode normal au mode de multi-connexion ; et
la commutation, par le premier dispositif d'entrée, du mode normal au mode multi-connexion, dans lequel le premier dispositif d'entrée en mode normal établit une connexion de communication sans fil uniquement avec le premier dispositif terminal ou
après la détection d'une opération d'allumage, par l'utilisateur, d'un commutateur utilisé pour activer une fonction de connexion multi-dispositifs sur le premier dispositif d'entrée, la commutation, par le premier dispositif d'entrée, d'un mode normal au mode de multi-connexion.

11. Procédé selon l'une quelconque des revendications 1 à 10, dans lequel le système de communication comprend également un second dispositif d'entrée, le second dispositif est en mode de fonctionnement multi-connexion, et maintient des connexions de communication avec le premier dispositif terminal et le second dispositif terminal, et le procédé comprend également :
l'envoi, par le premier dispositif terminal, d'informations d'indication de migration collaboratives au second dispositif d'entrée ; et
la commutation, par le second dispositif d'entrée, d'un dispositif de mise au point du premier dispositif terminal vers le second dispositif terminal en réponse aux informations d'indication de migration collaboratives, dans lequel
avant que le second dispositif d'entrée ne commute le dispositif de mise au point du premier dispositif terminal vers le second dispositif terminal, le second dispositif d'entrée est configuré pour entrer des informations au premier dispositif terminal ;
et après que le second dispositif d'entrée commute le dispositif de mise au point du premier dispositif terminal vers le second dispositif terminal, le second dispositif d'entrée est configuré pour entrer des informations au second dispositif terminal.

12. Procédé selon la revendication 11, dans lequel le second dispositif d'entrée est un clavier sans fil, et l'envoi, par le premier dispositif terminal, d'informations d'indication de migration collaboratives au second dispositif d'entrée comprend :
après la détection d'une opération d'activation d'une fonction de collaboration clavier-souris par l'utilisateur, l'envoi, par le premier dispositif terminal, des informations d'indication de migration collaboratives au premier dispositif d'entrée.

13. Procédé selon l'une quelconque des revendications 1 à 12, dans lequel
lorsque le premier dispositif d'entrée est en mode de fonctionnement multi-connexion, le premier dispositif d'entrée maintient une connexion de communication avec le premier terminal via une première adresse MAC de commande d'accès multimédia et une connexion de communication avec le second dispositif terminal via une seconde adresse MAC.

14. Système de communication, dans lequel le système de communication comprend :
un premier dispositif terminal, un second dispositif terminal, et un premier dispositif d'entrée, dans lequel le système de communication est configuré pour mettre en œuvre le procédé selon l'une quelconque des revendications 1 à 13.
